(19) **Europäisches Patentamt / European Patent Office / Office européen des brevets**

(11) **EP 3 502 844 B1**

(12) **FASCICULE DE BREVET EUROPEEN**

(45) Date de publication et mention de la délivrance du brevet:
**27.05.2020 Bulletin 2020/22**

(21) Numéro de dépôt: **18201556.0**

(22) Date de dépôt: **19.10.2018**

(51) Int Cl.:
**G06F 3/01** *(2006.01)*          **G01C 23/00** *(2006.01)*
**F41G 3/22** *(2006.01)*          **G02B 27/01** *(2006.01)*

(54) **PROCEDE ET SYSTEME DE RECALAGE D'UNE SYMBOLOGIE DE PILOTAGE D'UN AERONEF SUR UN AFFICHEUR TETE HAUTE PORTE CONFORME AVEC LE MONDE REEL EXTERIEUR VIA UN SYSTEME DE VISION SYNTHETIQUE SVS**

VERFAHREN UND SYSTEM ZUR NEUEINSTELLUNG EINER SYMBOLOGIE ZUM STEUERN EINES LUFTFAHRZEUGS AUF EINEM BORD-HEAD-UP-DISPLAY, DAS DIE REALE AUSSENWELT ÜBER EIN SYNTHETIC VISION SYSTEM (SVS-SYSTEM) KONFORM ANZEIGT

METHOD AND SYSTEM FOR RESETTING PILOTING SYMBOLOGY OF AN AIRCRAFT ON A WORN HEAD-UP DISPLAY IN ACCORDANCE WITH THE REAL WORLD OUTSIDE VIA AN SVS SYNTHETIC VISION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701340**

(43) Date de publication de la demande:
**26.06.2019 Bulletin 2019/26**

(73) Titulaire: **Thales**
**92400 Courbevoie (FR)**

(72) Inventeurs:
• **GANILLE, Thierry**
**33700 MERIGNAC (FR)**
• **MAULET, Daniel**
**26320 SAINT MARCEL LES VALENCE (FR)**
• **LEMOINE, Olivier**
**26300 JAILLANS (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
**WO-A1-2015/165838      WO-A2-2009/081177**

• TUCERYAN M ET AL: "Single point active alignment method (SPAAM) for optical see-through HMD calibration for AR", AUGMENTED REALITY, 2000. (ISAR 2000). PROCEEDINGS. IEEE AND ACM INTERNATIONAL SYMPOSIUM ON MUNICH, GERMANY 5-6 OCT. 2000, PISCATAWAY, NJ, USA,IEEE, US, 5 octobre 2000 (2000-10-05), pages 149-158, XP010520324, DOI: 10.1109/ISAR.2000.880938 ISBN: 978-0-7695-0846-7
• JANIN A L ET AL: "Calibration of head-mounted displays for augmented reality applications", VIRTUAL REALITY ANNUAL INTERNATIONAL SYMPOSIUM, 1993., 1993 IEEE SEATTLE, WA, USA 18-22 SEPT. 1, NEW YORK, NY, USA,IEEE, 18 septembre 1993 (1993-09-18), pages 246-255, XP010130485, DOI: 10.1109/VRAIS.1993.380772 ISBN: 978-0-7803-1363-7

**Description**

La présente invention concerne un procédé et un système de recalage d'une symbologie conforme sur une tête haute via un système de vision synthétique SVS.

L'invention se situe dans le domaine technique de l'Interface Homme Système (IHS) de pilotage pour des aéronefs, comme par exemple des hélicoptères ou des avions, équipés d'un système d'affichage en tête haute ou monté sur casque (en anglais Head Worn Display HWD ou Helmet Mounted Display HMD) et d'un Dispositif de Détection de Posture de tête DDP.

Les dispositifs d'affichage tête haute, qu'ils soient portés ou non, permettent d'afficher notamment une « symbologie » conforme au monde extérieur, c'est-à-dire un ensemble de symboles dont la position face à l'œil du pilote permet une superposition avec les éléments correspondants dans le monde extérieur. Il peut s'agir par exemple d'un vecteur vitesse, d'une cible au sol ou en l'air, d'une représentation synthétique du terrain ou encore d'une image de capteur.

Cet affichage conforme nécessite de connaître la position et l'attitude de l'aéronef et, pour les dispositifs d'affichage portés sur la tête, l'attitude de l'afficheur par rapport à un repère fixe lié à l'aéronef. Ces différentes positions et attitudes sont fournies par les systèmes avioniques pour celles de l'aéronef, et par le Dispositif de Détection de posture DDP pour celles de l'afficheur.

Par exemple et notamment, les systèmes avioniques de fourniture de position et de l'attitude d'un aéronef peuvent être respectivement :

.- un dispositif de positionnement global de type GPS (en anglais Global Positionning System), et
.- un Système de Référence Inertielle IRS (en anglais Inertial Reference System) ou un système de référence en attitude et en direction de cap AHRS (en anglais Attitude and Heading Reference System AHRS).

De manière connue, une harmonisation est effectuée à l'installation d'un système d'affichage tête haute, porté ou non porté, dans un cockpit afin de calculer les corrections d'angles à apporter pour passer du repère afficheur au repère aéronef, et afin d'obtenir un affichage tête haute conforme.

Des dispositifs d'affichage tête haute connus sont par exemple décrits dans les documents WO 2015 / 165838 A1 et WO 2009 / 081177 A2. Des procédés d'harmonisation et de recalage connus, pour des dispositifs d'affichage tête haute, sont par exemple décrits dans les documents Tuceryan et al "Single point active alignment method (SPAAM) for optical see-through HMD calibration for AR", IEEE and ACM International Symposium on Augmented Reality (ISAR2000), Munich Germany, 5-6 oct. 2000, et Janin et al "Calibration of head-mounted displays for augmented reality applications", IEEE Virtual Reality Annual International Symposium (VRAIS 93), Seattle, Washington, USA, 18-22 septembre 1993.

Or, certains dispositifs d'affichage tête haute portés de nos jours présentent une certaine mobilité entre le dispositif d'affichage ou afficheur et la partie portée du système de détection de posture DDP, du fait d'une non rigidité mécanique entre ces deux éléments, i.e. l'afficheur et la partie portée mobile du DDP, par exemple lorsqu'un dispositif de basculement de l'afficheur seul en dehors du champ de vision de l'opérateur existe. Il convient alors lors d'un nouveau basculement de l'afficheur dans le champ de vision de l'opérateur, de procéder à nouveau à une harmonisation afin de calculer de nouvelles corrections d'angle à apporter à la tête une fois la tête haute installée et ainsi de pouvoir afficher une symbologie conforme dans le dispositif d'affichage porté sur la tête.

Afin de permettre et de faciliter ce besoin de ré-harmonisation relativement fréquent, il est fréquent d'installer à bord de l'aéronef un instrument dédié, dénommé unité d'axe de visée de référence ou unité de réticule d'axe de visée BRU (en anglais Boresight Reference Unit ou Boresight Reticle Unit).

L'unité d'axe de visée de référence BRU, installée dans le cockpit face à la tête de l'opérateur affiche un symbole collimaté avec une orientation fixe et connue du système tête haute.

A chaque besoin de recalage de la symbologie conforme, i.e. de ré-harmonisation, l'opérateur aligne un symbole affiché dans sa tête haute avec le symbole collimaté de l'unité d'axe de visée de référence BRU.

Lorsque le symbole affiché dans la tête haute, i.e. l'afficheur est aligné sur le symbole collimaté, le système d'harmonisation de la sortie du dispositif de détection calcule alors une matrice de rotation à partir de trois angles de correction, afin de ré-harmoniser l'attitude du repère de l'afficheur par rapport au repère de l'aéronef.

Le défaut principal de ce système d'harmonisation basé sur l'utilisation d'une unité d'axe de visée de référence BRU est l'emport d'un équipement supplémentaire dédié à cette seule fonction de recalage ou d'harmonisation, induisant un coût en termes de complexité d'installation, un encombrement et un poids supplémentaires pouvant être rédhibitoires, en particulier pour les petits aéronefs civils. Cet équipement BRU doit être alimenté au travers d'un câblage électrique et installé de façon robuste. Cet équipement BRU requiert une procédure d'harmonisation lors de son installation et introduit un poste d'erreur supplémentaire, appelé l'erreur d'harmonisation du BRU. Un risque de désalignement par déplacement est possible par exemple lorsque le pilote entre ou sort de son cockpit ou lors d'une opération de maintenance.

En outre, les paramètres exacts d'orientation de cette unité d'axe de visée de référence BRU sur le porteur, i.e. la structure porteuse de l'aéronef, doivent également être introduits dans le système d'affichage monté sur casque HMD, et l'unité BRU doit donc toujours rester parfaitement fixe par rapport au porteur. Or les technologies mécaniques actuelles ne permettent pas de garantir un montage de l'unité BRU dans le cockpit sans risque de variations au cours du temps. En effet l'environnement vibratoire, les interventions du pilote et des opérateurs de maintenance notamment peuvent provoquer de légères rotations ou déplacements de l'unité d'axe de visée de référence BRU, ce qui a pour conséquence d'introduire une erreur sur la ligne de visée non compensable et dans de nombreux cas non détectable, et donc d'empêcher toute ré-harmonisation ultérieure.

Un premier problème technique est de fournir un système et un procédé de recalage qui permette de recaler la symbologie sur le monde extérieur lorsque système d'affichage de vision tête haute HWD/HMD dispose d'un mécanisme de dégagement et réengagement de l'afficheur dans le champ de vision du pilote, source de décalage, et évite l'utilisation d'un amer de calibration installé dans le cockpit et également source d'erreur.

Un deuxième problème technique est de déterminer avec plus de précision l'orientation relative entre l'afficheur D0 et le dispositif solidaire de la tête partie mobile sous-système de détection de posture de la tête lorsque le système de vision tête haute HWD/HMD dispose d'un mécanisme de dégagement et réengagement de l'afficheur dans le champ de vision du pilote.

Un troisième problème technique est de corriger l'orientation de l'aéronef fournie par sa centrale inertielle par rapport à la terre, en particulier pour le cap dont la valeur n'est généralement pas connue avec suffisamment de précision pour un affichage conforme lorsque cette centrale est une AHRS.

A cet effet, l'invention a pour objet un procédé de recalage d'un affichage tête haute porté via un système de visualisation synthétique SVS d'informations de pilotage d'un aéronef conformes avec le monde réel extérieur, le procédé de recalage étant mis en œuvre par un système d'affichage tête haute porté comprenant : un afficheur D0 tête haute porté ; un sous-système de détection de posture de tête DDP ayant un premier élément mobile de poursuite D1 attaché solidairement à l'afficheur D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel D3 de fourniture de l'attitude relative M3t de la plateforme par rapport à la Terre et un dispositif Dp de fourniture de la position de l'aéronef par rapport à la Terre ; un Système de Vision Synthétique de fourniture d'une image de terrain synthétique sur l'afficheur D0, asservie à et fonction de la position et de l'attitude relative M3t de l'aéronef mesurées respectivement par le dispositif inertiel et le dispositif de positionnement de l'aéronef, et l'orientation relative M12 du premier élément mobile de poursuite D1 par rapport au deuxième élément fixe D2 d sous-système de détection de posture; et un sous-système d'harmonisation duale pour aligner l'afficheur D0, le sous-système de détection de posture DDP et le dispositif inertiel D3 entre eux.

Le procédé de recalage est caractérisé en ce qu'il comprend des étapes consistant à : lancer le procédé de recalage, en activant un mode de recalage à un instant de début t1c d'état de recalage, en affichant tout ou partie d'informations de pilotage conformes, mises dans un état recalage, figées sur l'afficheur par rapport au mouvement de l'élément mobile de poursuite D1 et libres par rapport au mouvement de l'aéronef, et mémorisant ensemble l'instant de début t1c d'état de recalage et l'orientation relative correspondante entre le premier élément mobile de poursuite D1 et le deuxième élément fixe D2 du sous-système de détection de posture DDP ; puis effectuer une série d'un nombre prédéterminé N de mesures d'orientations relatives $\hat{K}_i$, i variant de 1 à N, du premier élément de poursuite D1 par rapport au deuxième élément fixe D2, lié à la plateforme, du sous-système de détection de posture DDP, correspondant à des visées Vi, i variant de 1 à N, dans lesquelles des éléments différents des informations de pilotage mises dans l'état de recalage sont superposés avec des amers correspondants du monde réel extérieur ; puis par un algorithme d'harmonisation duale, déterminer conjointement l'orientation relative M01 entre l'afficheur D0 et l'élément mobile de poursuite D1 et l'orientation M3t relative du dispositif inertiel D3 par rapport à la Terre à partir des matrices de rotation $\hat{K}_i$ mesurées par le sous-système DDP, et des matrices théoriques $\hat{U}_i$ de rotation de DDP attendues correspondantes, étant supposé que l'orientation relative du deuxième élément fixe D2 par rapport au dispositif inertielle d'attitude D3 est égale en permanence à la matrice identité de rang 3.

Suivant des modes particuliers de réalisation, le procédé de recalage de l'affichage tête haute porté via un système de visualisation synthétique SVS d'informations de pilotage d'un aéronef conformes avec le monde réel extérieur comporte l'une ou plusieurs des caractéristiques suivantes :

.- les informations de pilotage conformes sont compris dans l'ensemble formé d'une symbologie conforme, notamment une piste d'atterrissage synthétique, d'une représentation synthétique de terrain SVS et d'une image issue d'un capteur électromagnétique, notamment une caméra infrarouge ;

.- le procédé de recalage de l'affichage tête haute porté comprend en outre une étape dans laquelle les matrices de correction droite M01 et de correction gauche M3t harmonisées sont fournies au système de vision synthétique SVS, le mode de recalage est désactivé par le sous-système d'harmonisation, et le système de vision synthétique SVS recale son affichage en appliquant les matrices de correction recalées M01 et M3t ;

.- l'algorithme d'harmonisation duale calcule la matrice d'orientation relative M01 entre l'afficheur D0 et l'élément de poursuite du sous-système DDP et la matrice d'orientation relative M3t du dispositif inertiel d'attitude D3, lié à l'aéronef, par rapport à la Terre respectivement comme la matrice de rotation de correction à droite $\hat{D}$ et la matrice de rotation de correction à gauche $\hat{G}$ comme solutions conjointes du système d'équations d'harmonisation duale : $\hat{U}_i = \hat{G} \cdot \hat{K}_i \cdot \hat{D}$, i variant de 1 à N ;

.- le minimum du nombre de mesures N requis dépend du nombre L de degrés de liberté angulaire des rotations M01 et M3t du système d'affichage HMD erronées ou inexploitables, ledit nombre L étant un entier supérieur ou égal à 1 et inférieur ou égal à 6, et la résolution du système d'équations $\hat{U}_i = \hat{G} \cdot \hat{K}_i \cdot \hat{D}$, i variant de 1 à N utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la rotation à droite $\hat{D}$ et la rotation à gauche $\hat{G}$;

.- le nombre N est supérieur ou égal à 3, et l'étape de résolution du système d'équations d'harmonisation duale comprend un premier ensemble (312) de sous étapes consistant à : dans une première sous-étape, choisir une mesure "pivot" comme étant la première mesure parmi les N mesures et correspondant à i égal à 1, et pour i = 2, $\cdots$, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis dans une deuxième sous-étape, déterminer pour i = 2,$\cdots$, N, les vecteurs unitaires principaux des rotations $\hat{U}_{1,i}$ et $\hat{K}_{1,i}$, désignés respectivement par $\vec{u}_i$ et $\vec{k}_i$ ; ensuite dans une troisième sous-étape, calculer la matrice droite $\hat{D}$, i.e. M01, à l'aide de l'équation :

$\hat{D} = \pi(\sum_{i \geq 2}(\vec{k}_i \cdot \vec{u}_i^T))$ ; ensuite dans une quatrième sous-étape, déterminer la matrice de rotation à gauche $\hat{G}$ ; i.e. M3t, à partir de la matrice $\hat{D}$ calculée dans la troisième sous-étape (318), à l'aide de l'équation : $\hat{G} = \pi(\sum_{i \geq 1}(\hat{U}_i \cdot \hat{D}^T \cdot \hat{K}_i^T))$ ;

.- le nombre de degrés de liberté angulaire de la rotation à droite $\hat{D}$, c'est-à-dire la matrice M01, erronés ou inexploitables, est égal à trois et le seul degré de liberté angulaire erroné ou inexploitable de la rotation à gauche $\hat{G}$, c'est-à-dire la matrice M3t, est l'angle de cap, étant supposé que les angles de tangage et de roulis sont supposés connus avec une précision suffisante ; et le nombre total N de mesures est supérieur ou égal à 4 ; et l'étape de résolution du système d'équations d'harmonisation duale comprend un premier ensemble de sous étapes consistant à : dans une quatrième sous-étape (414), pour i = 2, $\cdots$, N, calculer les matrices $\hat{U}_{1,i}$ et les vecteurs $\vec{q}_i$ à l'aide des

$$\vec{k} = \begin{pmatrix} 0 \\ 0 \\ 1 \end{pmatrix} ;$$

équations : $\hat{U}_{1,i} = \hat{U}_1^T \cdot \hat{U}_i$ et $\vec{q}_i = \hat{Q}_i^T \cdot \vec{k}$, le vecteur $\vec{k}$ étant défini par l'équation puis dans une cinquième sous-étape d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$, $I_3$ désignant la matrice identité ; ensuite répéter une sixième sous-étape itérative faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i \geq 2}(\widehat{U}_{1,i} \cdot \widehat{D}_{[s]}^T \cdot \vec{q}_i)}{\|\sum_{i \geq 2}(\widehat{U}_{1,i} \cdot \widehat{D}^T \cdot \vec{q}_i)\|}$$

$$\widehat{D}_{[s+1]} = \pi\left(\sum_{i \geq 2}(\vec{q}_i \cdot \vec{d}_{[s+1]}^T \cdot \widehat{U}_{1,i})\right)$$

la suite $\{\vec{d}_{[s]}\}$ désignant une deuxième suite auxiliaire de vecteurs et la suite $\{\hat{D}_{[s]}\}$ convergeant vers $\hat{D}$ ; et arrêter dans une septième sous-étape le processus itératif effectué au travers de la sixième sous-étape lorsque la limite $\hat{D}$ est approximée avec une précision suffisante définie par une valeur de seuil prédéterminée ;

.- le nombre totale N de mesures est ajusté en fonction du nombre L de degrés de liberté à corriger du système HMS et de précision souhaitée de l'estimation des matrices de rotation à droite et à gauche, $\hat{D}$ et $\hat{G}$.

L'invention a également pour objet un système d'affichage tête haute porté d'informations de pilotage d'un aéronef, conformes au monde réel extérieur et fournies via un système de visualisation synthétique SVS, comprenant : un afficheur D0 tête haute porté ; un sous-système de détection de posture de tête DDP ayant un premier élément mobile de poursuite D1, attaché solidairement à l'afficheur D0, un deuxième élément fixe D2 lié solidairement à la plateforme de l'aéronef, et un moyen de mesure et de détermination de l'orientation relative M12 du premier élément mobile de poursuite D1 par rapport à un repère de référence du deuxième élément fixe D2 lié à la plateforme ; un dispositif inertiel D3 de fourniture d'une attitude relative M3t de la plateforme par rapport à un repère terrestre ; un dispositif Dp de fourniture de la position de l'aéronef par rapport à la Terre ; un Système de Vision Synthétique SVS de fourniture d'une image de terrain synthétique sur l'afficheur D0, asservie à et fonction de ; la position et l'attitude relative M3t de l'aéronef mesurées respectivement par le dispositif inertiel d'attitude D3 et le dispositif de positionnement de l'aéronef, et l'orientation relative M12 du premier élément mobile de poursuite D1 par rapport au deuxième élément fixe D2 du sous-système de détection porteuse DDP; et un sous-système d'harmonisation pour aligner l'afficheur D0, le sous-système de détection de posture DDP, et le dispositif inertiel s'attitude D3, entre eux.

Le système d'affichage tête haute porté d'informations de pilotage conformes au monde réel extérieur terrestre est caractérisé en ce que :

.- le sous-système d'harmonisation comporte un calculateur d'harmonisation duale et une interface homme-système IHS intégrant une fonction de recalage de l'affichage en tête haute conforme ; et

.- le sous-système d'harmonisation duale est configuré pour : lancer le procédé de recalage, en activant un mode de recalage à un instant de début t1c d'état de recalage, en affichant tout ou partie d'informations de pilotage conformes, mises dans un état recalage, figées sur l'afficheur par rapport au mouvement de l'élément mobile de poursuite D1 et libres par rapport au mouvement de l'aéronef, et mémorisant ensemble l'instant de début t1c d'état de recalage et l'orientation relative correspondante entre le premier élément mobile de poursuite D1 et le deuxième élément fixe D2 du sous-système de détection de posture DDP ; puis effectuer une série d'un nombre prédéterminé N de mesures d'orientations relatives $\hat{K}_i$, i variant de 1 à N, du premier élément de poursuite D1 par rapport au deuxième élément fixe D2, lié à la plateforme, du sous-système de détection de posture DDP, correspondant à des visées Vi, i variant de 1 à N, dans lesquels des éléments différents des informations de pilotage mises dans l'état de recalage sont superposés avec des amers correspondants du monde réel extérieur ; puis par un algorithme d'harmonisation duale, déterminer conjointement l'orientation relative M01 entre l'afficheur D0 et l'élément mobile de poursuite D1 et l'orientation M3t relative du dispositif inertielle D3 par rapport à la Terre à partir des matrices de rotation $\hat{K}_i$ mesurées par le sous-système DDP, et des matrices théoriques $\hat{U}_i$ de rotation de DDP attendues correspondantes, étant supposé que l'orientation relative du deuxième élément fixe D2 par rapport au dispositif inertiel d'attitude D3 est égale en permanence à la matrice identité de rang 3.

Suivant des modes particuliers de réalisation, le système d'affichage tête haute porté comporte l'une ou plusieurs des caractéristiques suivantes :

.- le sous-système d'harmonisation duale est configuré pour calculer la matrice d'orientation relative M01 entre l'afficheur D0 et l'élément de poursuite du sous-système DDP et la matrice d'orientation relative M3t du dispositif inertiel d'attitude D3, lié à l'aéronef, par rapport à la Terre respectivement comme la matrice de rotation de correction à droite $\hat{D}$ et la matrice de rotation de correction à gauche G comme solutions conjointes du système d'équations : $\hat{U}_i = G \cdot \hat{K}_i \cdot \hat{D}$, i variant de 1 à N ;

.- le minimum du nombre de mesures N requis dépend du nombre L de degrés de liberté angulaire des rotations M01 et M3t du système d'affichage HMD erronés ou inexploitables, ledit nombre L étant un entier supérieur ou égal à 1 et inférieur ou égal à 6 ; et la résolution du système d'équations $\hat{U}_i = G \cdot \hat{K}_i \cdot \hat{D}$, i variant de 1 à N, utilise un opérateur de redressement $\pi(.)$ qui transforme une matrice quelconque A en une matrice carré 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la rotation à droite $\hat{D}$ et la rotation à gauche $\hat{G}$;

.- le nombre N est supérieur ou égal à 3 ; et le calculateur d'harmonisation duale conjointe est configuré pour mettre en œuvre une étape de résolution du système d'équations d'harmonisation duale en exécutant un premier ensemble de sous étapes consistant à : dans une première sous-étape, choisir une mesure "pivot" comme étant la première mesure parmi les N mesures et correspondant à i égal à 1, et pour i = 2,···,N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis dans une deuxième sous-étape, déterminer pour i = 2, ···, N, les vecteurs unitaires principaux des rotations $\hat{U}_{1,i}$ et $\hat{K}_{1,i}$, désignés respectivement par $\vec{u}_i$ et $\vec{k}_i$ ; ensuite dans une troisième sous-étape, calculer la matrice droite $\hat{D}$, i.e. M01, à l'aide de l'équation :

$\hat{D} = \pi(\sum_{i \geq 2}(\vec{k}_i \cdot \vec{u}_i^T))$; ensuite dans une quatrième sous-étape, déterminer la matrice de rotation à gauche $\hat{G}$ ; i.e. M3t, à partir de la matrice $\hat{D}$ calculée dans la troisième sous-étape, à l'aide de l'équation :

$$\widehat{G} = \pi\left(\sum_{i\geq 1}\left(\widehat{U}_i \cdot \widehat{D}^T \cdot \widehat{K}_i^{\ T}\right)\right) \ ;$$

.- le nombre de degrés de liberté angulaire de la rotation à droite $\hat{D}$, c'est-à-dire la matrice M01, erronés ou inexploitables, est égal à trois et le seul degré de liberté angulaire erroné ou inexploitable de la rotation à gauche $\hat{G}$, c'est-à-dire la matrice M3t, est l'angle de cap, étant supposé que les angles de tangage et de roulis sont supposés connus avec une précision suffisante ; et le nombre total N de mesures est supérieur ou égal à 4 ; et le calculateur d'harmonisation duale est configuré pour mettre en œuvre une étape de résolution du système d'équations d'harmonisation duale en exécutant un premier ensemble de sous étapes consistant à : dans une quatrième sous-étape, pour i = 2, ···, N, calculer les matrices $\hat{U}_{1,i}$ et les vecteurs $\vec{q}_i$ à l'aide des équations : $\hat{U}_{1,i} = \hat{U}_1^T \cdot \hat{U}_i$ et $\vec{q}_i = \hat{Q}_i^T \cdot \vec{k}$, le

$$\vec{k} = \begin{pmatrix} 0 \\ 0 \\ 1 \end{pmatrix} \ ;$$

vecteur $\vec{k}$ étant défini par l'équation puis dans une cinquième sous-étape d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$ , $I_3$ désignant la matrice identité ; ensuite répéter une sixième sous-étape itérative faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i\geq 2}\left(\widehat{U}_{1,i} \cdot \widehat{D}_{[s]}^T \cdot \vec{q}_i\right)}{\left\|\sum_{i\geq 2}\left(\widehat{U}_{1,i} \cdot \widehat{D}^T \cdot \vec{q}_i\right)\right\|}$$

$$\widehat{D}_{[s+1]} = \pi\left(\sum_{i\geq 2}\left(\vec{q}_i \cdot \vec{d}_{[s+1]}^T \cdot \widehat{U}_{1,i}\right)\right)$$

la suite $\{\vec{d}_{[s]}\}$ désignant une deuxième suite auxiliaire de vecteurs et la suite $\{\hat{D}_{[s]}\}$ convergeant vers $\hat{D}$ ; et arrêter dans une septième sous-étape le processus itératif effectué au travers de la sixième sous-étape lorsque la limite $\hat{D}$ est approximée avec une précision suffisante définie par une valeur de seuil prédéterminée ;

.- le sous-système d'harmonisation duale est configuré lors de la mise en œuvre des mesures de recalage pour représenter les informations de pilotage servant aux visées, c'est-à-dire la symbologie et/ou la représentation synthétique du terrain et/ou l'image d'un capteur électromagnétique suivant un mode de représentation propre au mode de mesure par une couleur ou de style de trait distinctif.

L'invention sera mieux comprise à la lecture de la description de plusieurs formes de réalisation qui va suivre, donnée uniquement à titre d'exemple et faite en se référant aux dessins sur lesquels :

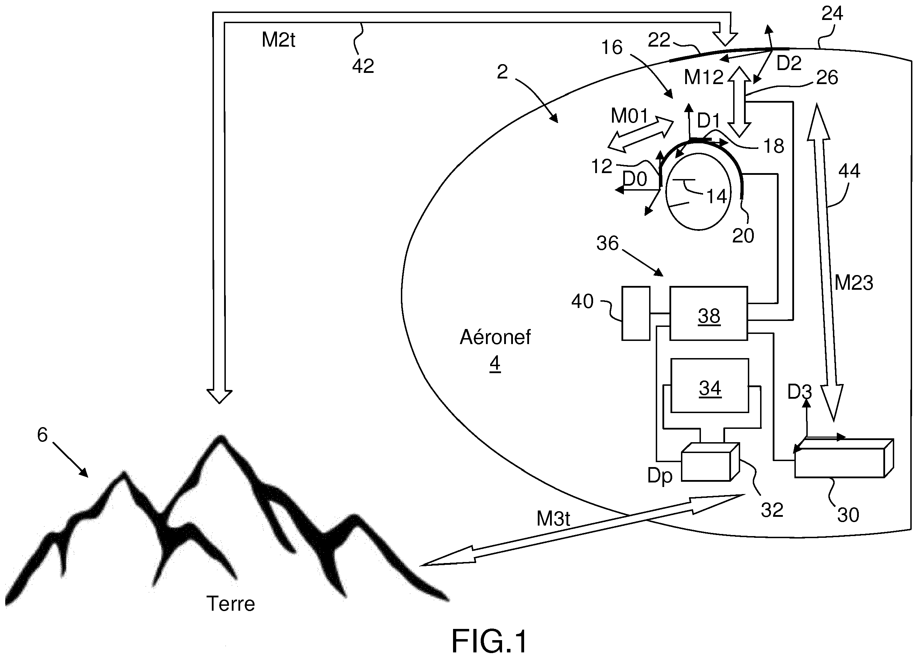

.- la Figure 1 est une vue d'un système d'affichage tête haute porté d'informations de pilotage d'un aéronef, conformes au monde réel extérieur et fournies via un système de visualisation synthétique SVS, dans lequel un procédé de recalage utilisant le SVS est mis en œuvre ;

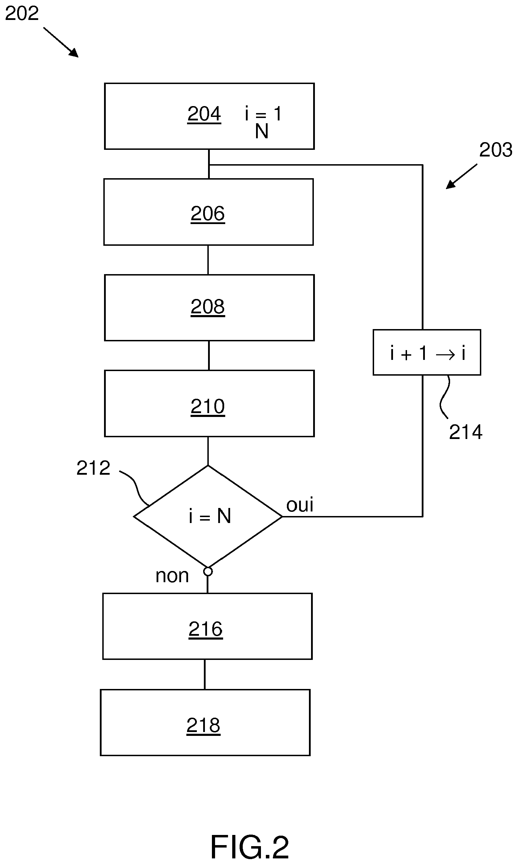

.- la Figure 2 est un ordinogramme d'un procédé selon l'invention d'harmonisation du système d'affichage tête haute porté se la Figure 1, et de recalage de l'affichage des informations de pilotage, conformes avec le monde réel extérieur et fournies par le système de vision synthétique SVS ;

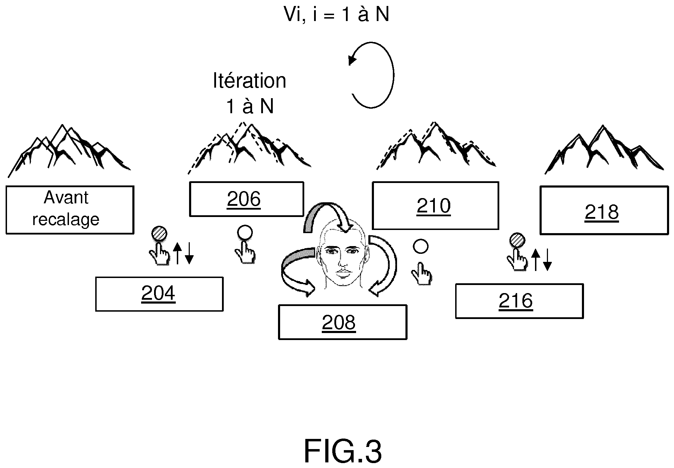

.- la Figure 3 est une vue opérationnelle d'un exemple de déroulement des étapes du procédé de recalage selon l'invention de la Figure 2 ;

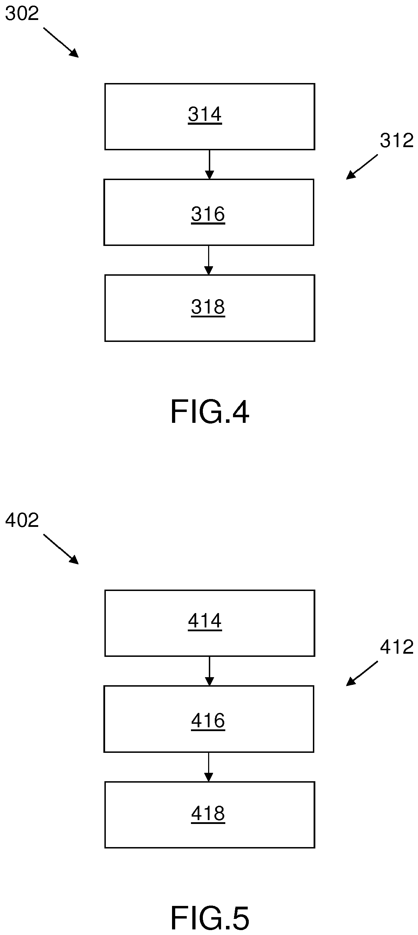

.- la Figure 4 est un ordinogramme détaillé d'un premier mode de réalisation de l'étape de résolution du système d'équations d'harmonisation duale du procédé de recalage de la Figure 2 ;

.- la Figure 5 est un ordinogramme détaillé d'un deuxième mode de réalisation de l'étape de résolution du système d'équations d'harmonisation duale du procédé de recalage de la Figure 2.

Le principe de base du procédé selon l'invention de recalage d'informations de pilotage d'un aéronef, conformes avec le monde extérieur et fournies par le système SVS, repose sur :

.- l'utilisation de la représentation synthétique du terrain terrestre survolé ou un symbole, fournie par le système de visualisation conforme SVS, ou l'utilisation d'une image d'un objet provenant d'un capteur de rayonnement électromagnétique, par exemple une caméra infrarouge IR fixe regardant vers l'avant de l'aéronef, ou mobile et asservie à l'orientation de la tête du pilote, ou l'utilisation de tout autre symbole conforme affiché sur la tête haute portée ; et

.- l'aptitude conférée à l'opérateur, i.e. le pilote dans le cas d'un aéronef, de :

- • * déplacer et superposer la représentation synthétique du terrain fourni par le SVS ou l'image capteur ou le symbole conforme sur l'élément correspondant du terrain réel vu au travers de l'afficheur tête haute, puis
- • * une fois la superposition obtenue, mémoriser ce recalage de manière similaire à l'emploi d'une unité d'axe de visée de référence BRU, c'est-à-dire sous la forme de trois angles d'attitude de détection de posture de la tête DDP, mais cette fois-ci sans créer d'erreur supplémentaire compte tenu que le terrain réel est pris comme la référence fixe absolue ; et

.- l'aptitude du système de recalage de la symbologie conforme à :

- • * déterminer des corrections d'attitude à appliquer au système d'affichage de la symbologie conforme sous la forme de deux matrices de rotation, l'une gauche l'autre droite, de correction de la détection de posture DDP de la tête, puis
- • * appliquer les corrections d'attitude à toute la symbologie conforme.

Suivant la Figure 1, un système d'affichage tête haute 2 selon l'invention est configuré pour afficher des informations de pilotage d'un aéronef 4 sur un affichage en les rendant conformes avec le monde réel extérieur 6.

Les informations conformes de pilotage comprennent par exemple un vecteur vitesse, une cible au sol ou en l'air, une représentation synthétique du terrain ou encore d'une image de capteur.

Le système d'affichage tête haute porté 2 comprend les dispositifs et moyens suivants :

.- un dispositif d'affichage ou afficheur 12 tête haute porté transparent, désigné par D0, positionné devant l'œil 14 d'un pilote et pouvant lui servir de viseur, par exemple une lentille ;

.- un sous-système 16 de détection de détection de posture DDP, ayant un premier élément mobile de poursuite 18, désigné par D1, attaché rigidement à la tête 19 ou au casque 20 du pilote et attaché rigidement à l'afficheur D0 lorsque l'afficheur D0 est mis dans le champ de vision du pilote, un deuxième élément fixe 22 D2, lié solidairement à la plateforme 24 (désignée également par « pl ») de l'aéronef 4 et servant de repère de référence vis-à-vis du sous-système 16 détection de posture DDP, et un moyen 26 de mesure et de détermination de l'orientation relative M12 du premier élément mobile de poursuite 18 D1 par rapport à un repère de référence du deuxième élément fixe 22 D2 lié à la plateforme,

.- un dispositif inertiel d'attitude 30 D3, par exemple une centrale inertielle AHRS, de fourniture de l'attitude relative M3t de la plateforme par rapport à un repère terrestre « t » lié à la Terre, fixé à la plateforme,

.- un dispositif 32 Dp de fourniture de la position de l'aéronef par rapport au repère terrestre lié à la Terre, par exemple un système de positionnement par satellite de type GPS ou un système de radionavigation ;

.- un sous-système de vision synthétique 36 SVS de fourniture d'un flot d'images synthétisées conformes avec le monde réel extérieur 6, vues par la pilote au travers de l'afficheur D0 en étant asservies à l'évolution de l'orientation de la posture de la tête, fournie par le sous-système de détection de posture 16 DDP, et à l'évolution de la position et l'attitude de l'aéronef 4 par rapport à la Terre, fournies respectivement par le dispositif de positionnement Dp de l'aéronef et le dispositif inertiel d'attitude D3 ;

.- un sous-système d'harmonisation 38 duale et de recalage de la symbologie du système d'affichage tête haute 2 pour rendre conforme et recaler l'affichage d'informations de pilotage sur l'afficheur 12 D0 avec le monde réel extérieur 6, le sous-système d'harmonisation duale 36 et de recalage ayant un calculateur d'harmonisation duale 38 et une Interface Homme Système 408, configurés pour réaliser et gérer les opérations d'interface entre l'opérateur et les composantes du système d'affichage tête haute 2 pendant la mise en œuvre du procédé d'harmonisation duale et du recalage de la symbologie.

Le calculateur d'harmonisation duale 36 peut être un calculateur électronique, dédié spécifiquement à la mise en œuvre du procédé d'harmonisation duale, ou un calculateur électronique à vocation plus générale que prévu pour mettre en œuvre également d'autres fonctions du système d'affichage tête haute 2.

De même, l'Interface Homme Système 38 peut être une interface Homme Système dédiée uniquement à la réalisation du procédé d'harmonisation duale ou une interface Homme Système plus générale réalisant de manière partagée d'autres fonctions du système d'affichage tête haute.

Le système d'affichage comporte également un moyen 42 pour définir, mesurer ou déterminer l'orientation angulaire relative M2t du deuxième élément fixe 22 D2 par rapport à la Terre, et un moyen 44 permettant de connaitre l'orientation relative M23 du deuxième élément fixe 22 D2, lié à la plateforme 24, par rapport au dispositif inertiel d'attitude 30 D3.

Le moyen 44 est mis en œuvre sous la forme d'une procédure réalisée à l'installation du système d'affichage tête haute porté 2 et l'orientation M23 est supposée constante dans le temps.

Le moyen 42 utilise les données du dispositif inertiel d'attitude D3, attaché à la plateforme de l'aéronef et configuré pour mesurer sa propre orientation M3t par rapport à la Terre, et l'orientation angulaire M23 fourni par le moyen 44.

Les informations conformes de pilotage comprennent par exemple un vecteur vitesse, une cible au sol, une représentation synthétique du terrain ou encore d'une image d'un capteur électromagnétique, par exemple d'un capteur infrarouge.

Il est à remarquer que dans l'état de l'art actuel des systèmes d'affichage tête haute porté, les sous-systèmes de détection de posture 16 DDP peuvent être de type électromagnétique ou de type inertiel, et qu'un sous-système de détection de posture de type inertiel est relativement complexe en pratique car il met en œuvre deux mesures :

.- une mesure inertielle de l'orientation angulaire relative M2t du deuxième élément fixe 22 D2 par rapport à la Terre, et

.- une mesure directe de l'orientation relative du premier élément mobile de poursuite 18 D1 par rapport au deuxième élément fixe 22 D2, souvent sous la forme d'un traitement d'images,

et utilise la connaissance de l'orientation relative M2t du deuxième élément fixe 22 D2 par rapport à la Terre. Toutefois, si cette particularité rend les algorithmes plus complexes, cette particularité n'a pas d'impact sur le système d'affichage tête haute porté et le procédé d'harmonisation duale de la présente invention, et on pourra considérer par la suite que l'orientation relative M12 du premier élément de poursuite D1 par rapport au deuxième élément fixe D2 est simplement fourni par une mesure directe du sous-système de détection de posture DDP.

Ici et suivant un mode de réalisation préférée par la suite, le sous-système de détection de posture 16 DDP est configuré pour fournir des données brutes de sortie DDP issues prioritairement de mesures directes optiques de l'orientation relative entre le premier élément de poursuite D1 par rapport au deuxième élément fixe D2.

Il est à remarquer également qu'ici pour des raisons de simplification, la plateforme et le dispositif inertiel d'attitude D3 sont assimilés. De manière générale le moyen 44 de fourniture de l'orientation relative M23 est configuré pour réaliser cette fonction en deux étapes : une première étape de passage par la plateforme dans laquelle le repère triaxial du dispositif inertiel d'attitude D3 est « aligné » sur le repère triaxial de la plateforme, puis une deuxième étape dans laquelle l'orientation du deuxième élément fixe D2 est harmonisée sur le repère de la plateforme.

Ces remarques sont sans incidence ici sur le contenu de la présente invention.

Par la suite, les moyens Mij permettant de connaitre l'orientation relative d'un repère « i » à un autre «j» sont assimilés dans la suite de ce document à la matrice décrivant cette orientation. En effet, l'orientation Mij d'un repère par rapport à un autre peut être décrite indifféremment par :

.- trois angles appelés angles d'Euler, qui conventionnellement en aéronautique, correspondent à l'ordre des rotations pour les angles suivants :

- \* Gisement pour la posture de tête ou lacet pour l'aéronef : rotation autour de l'axe z qui est orienté vers le bas (ou vers la Terre) ;
- \* Site pour la posture de tête ou tangage pour l'aéronef : rotation autour de l'axe y qui est orienté vers la droite (ou vers l'est de la Terre) ;
- \* Roulis pour la posture de tête et l'aéronef : rotation autour de l'axe x qui est orienté vers l'avant (ou vers le nord de la Terre),

.- une matrice 3x3 décrivant cette rotation.

Par la suite, la matrice Mij pourra être notée également M(i/j), la matrice Mij ou M(i/j) décrivant l'orientation relative du repère « i » par rapport à « j » (ou de « i » vers « j »). Si vi est l'expression d'un vecteur dans le repère « i » et vj l'expression de ce vecteur dans le repère « j », alors on a la relation : vi = M(i/j) \* vj et la relation de passage entre repères : M(i/k) (de i vers k) = M(j/k) \* M(i/j).

Le système d'affichage tête haute porté 2 selon l'invention est configuré pour mettre en œuvre un procédé de recalage de la symbologie et/ou d'une image synthétisée de terrain fournis par le sous-système de vision synthétique SVS dans lequel la symbologie et/ou le terrain affichés sur l'afficheur sont rendus conformes au monde réel extérieur vu par l'opérateur au travers de l'afficheur, en permettant :

.- à l'opérateur du système d'affichage tête haute d'effectuer des visées en superposant sur le paysage réel ou monde réel extérieur, une image de terrain conforme ou un symbole tridimensionnel conforme synthétisé et fourni par le sous-système de synthèse SVS, ou une image issue d'un capteur électromagnétique, par exemple un capteur infrarouge, affiché sur l'afficheur, figé à partir d'un instant de début de visée vis-à-vis seulement des mouvements de tête jusqu'à un instant de fin de visée ;

.- pour chaque visée, mémoriser les angles d'orientation de la posture de la tête à l'instant de début de visée et à l'instant de fin de visée, et calculer la matrice de rotation mesurée entre l'instant de début de visée et l'instant de fin de visée ; puis

.- calculer conjointement à l'aide d'un algorithme d'harmonisation duale deux matrices de rotation, gauche et droite, de correction de la détection de posture DDP de la tête, puis

.- appliquer les deux matrices de correction d'attitude pour harmoniser les composantes de l'afficheur de tête haute et permettre au système de visualisation synthétique SVS de rendre conforme la symbologie et le terrain avec le monde réel extérieur.

Le calcul des deux matrices de rotation de correction utilise le procédé d'harmonisation duale décrit dans la demande de brevet intitulée « Procédé et système d'harmonisation duale d'un système de détection de posture », déposée à la même date que la présente demande, dans son premier et deuxième modes de réalisation.

Il est à remarquer que plusieurs niveaux de recalage peuvent être définis en fonction de la nature des performances du système d'affichage tête haute et de la qualité de recalage recherchée. De manière générale, un affichage conforme d'un symbole affiché en tête haute avec le monde réel extérieur dépend de manière générale de six degrés de liberté angulaires formés par trois angles d'attitude de la tête et trois angles d'attitude de l'aéronef. Par le procédé d'harmonisation duale et de recalage de la symbologie, on cherche idéalement à corriger les trois angles donnant le moyen M01 et les trois angles donnant le moyen M3t, mais on ne cherche pas à recaler une éventuelle erreur de position ou d'altitude de l'aéronef.

Ainsi, avec une seule mesure d'attitude de tête, i.e. angle de site, angle de gisement et angle de roulis de tête, on n'acquiert pas suffisamment de données pour corriger les six angles recherchés. Mais en itérant les prises de mesures d'angles de correction, il est possible d'acquérir le nombre de données suffisant permettant la correction recherchée.

Ainsi pour corriger les six angles, on a besoin au minimum de trois mesures d'attitude différentes, chaque mesure d'attitude comportant une mesure de site, une mesure de gisement, et une mesure de roulis de tête. Par exemple, une procédure de recalage complet peut être définie dans laquelle il est demandé à l'utilisateur ou pilote d'effectuer trois mesures successives correspondant respectivement à une première station de mesure dans laquelle la tête regarde horizontalement vers la droite de l'aéronef, puis une deuxième station de mesure dans laquelle la tête regarde vers le centre penchée vers le haut ou vers le bas, et enfin une troisième station de mesure où la tête regarde horizontalement vers la gauche. L'interface Homme Machine spécifique aide alors le pilote par des messages affichés sur sa tête haute pour le guider pendant cette procédure.

Suivant la Figure 2, un procédé de recalage 202 d'un affichage tête haute porté d'informations de pilotage d'un aéronef, fournies par un sous-système SVS pour les rendre conformes avec le monde réel extérieur, comporte un ensemble 203 d'étapes.

Dans une première étape de lancement 204, un déclenchement de la procédure de recalage des informations conformes de pilotage de l'aéronef du SVS (terrain et/ou symbole de la symbologie) est actionné à un instant de début t1c du mode de recalage par l'opérateur du système d'affichage tête haute 2, par exemple par un premier appui bref sur un bouton de l'IHS 40, situé dans le cockpit dédié à ce déclenchement du mode de recalage.

A partir de cet instant t1c de début du recalage, tout ou partie des informations de pilotage, c'est-à-dire soit une image seule du terrain visualisé de manière synthétique par le SVS, soit une image seule d'un capteur électromagnétique par exemple d'un capteur infrarouge, soit un symbole représentatif d'un élément particulier du terrain comme par exemple d'une piste d'atterrissage, soit une image d'ensemble de toutes les informations du SVS conformes (terrain synthétisé et symboles), est mis dans un état de recalage.

Dans cet état de recalage, les symboles et/ou le terrain synthétisé SVS concernés sont affichés sur l'afficheur dans un mode d'affichage dit de « recalage » en fonction des angles d'attitude de tête (site, gisement et roulis) fixes, mesurés par le sous-système de détection de posture DDP de la tête à l'instant du déclenchement t1c du procédé de recalage et mémorisés, et en fonction des mouvements de l'aéronef.

Ainsi, pendant toute la durée du procédé de recalage, c'est-à-dire jusqu'à la sortie du mode de recalage, la symbologie et le terrain synthétisé par le SVS continuent à être alimentés par les paramètres de mouvement de l'aéronef, i.e. la position et l'attitude de l'aéronef, et donc à être mobile en fonction des mouvements de l'aéronef.

Optionnellement, les symboles concernés peuvent changer d'aspects de représentation pour matérialiser l'état de recalage, par exemple par un changement de couleur, de style de trait (par exemple trait pointillé au lieu de trait plein), de mode de représentation du terrain SVS (filaire pour des contours, plein pour des éléments de surface).

Dans la première étape de lancement 204, un mode de mesure est actionné dans lequel un compteur de parcours d'une série d'un nombre entier prédéterminé N de mesures ou visées Vi met un indice i de parcours des mesures égal à 1.

Puis, dans une deuxième étape 206, l'interface homme-système IHS 40 invite l'opérateur à effectuer la mesure actuelle « i » de rang i. L'opérateur débute et déclenche la mesure de rang i, par exemple par un appui maintenu sur un bouton, dédié à la mesure, qui ne cessera que lors de la validation de visée actuelle Vi.

Dès que la prise de mesure est enclenchée, l'appui sur le bouton de mesure étant maintenu, dans une troisième étape de mesure 208, l'opérateur superpose un élément différent des informations de pilotage, figés sur l'afficheur par rapport aux mouvements du premier élément de poursuite 18 D1, sur l'amer correspondant du monde réel extérieur.

Par exemple, la superposition sera celle de l'image d'une portion du terrain synthétisé SVS sur le terrain réel, celle de l'image d'un capteur infrarouge IR sur le terrain réel, celle de l'image d'un symbole de piste ou d'hélipad sur l'élément réel correspondant, en opérant de légers mouvements de tête.

Ensuite, lorsque la superposition de l'image sur l'élément de paysage a été obtenue, dans une quatrième étape 210 de validation de la mesure actuelle, la mesure actuelle Vi de rang i est validée, ici sur le relâchement de l'appui du bouton, et les trois angles de détection de posture DDP de la tête, i.e. un angle de site, un angle de gisement et un angle de roulis, correspondant à l'attitude de la tête de l'opérateur lors de cette visée Vi sont mémorisés.

Puis, dans une cinquième étape 212 de test, on vérifie si le nombre N de mesures souhaitées a été atteint.

Tant que le nombre N n'a pas été atteint, le mode de recalage restant activé, les deuxième, troisième, quatrième étapes 206, 208, 210 sont réitérées, en ayant au préalable dans une sixième étape 214 incrémenté d'une unité l'indice i de parcours actuel du compteur « i ».

Lorsque le nombre total N de mesures souhaitées a été atteint, dans une septième étape 216, les éléments de la symbologie et de terrain du SVS, mis dans un état de recalage lors de la première étape 204, sont désactivés de cet état de recalage à un instant t2c de fin d'état de recalage, et replacés dans un état de suivi de conformité fonction des mouvements de la tête et des mouvements de l'aéronef.

Dans cette même septième étape 216, une harmonisation duale du système d'affichage tête haute est effectuée dans laquelle l'orientation relative M01 entre l'afficheur 12 D0 et l'élément mobile de poursuite 18 D1 et l'orientation M3t relative du dispositif inertiel D3 par rapport à la Terre sont déterminés conjointement à partir des matrices de rotation $\hat{K}_i$ mesurées par le sous-système DDP entre l'instant de début de l'état de recalage t1c et l'instant de fin de l'état de recalage, et des matrices théoriques $\hat{U}_i$ de rotation de DDP attendues correspondantes, étant supposé que l'orientation relative du deuxième élément fixe D2 par rapport au dispositif inertielle d'attitude D3 est égale en permanence à la matrice identité de rang 3.

En variante, lorsque le système d'affichage tête haute porté, de par sa conception, requiert plusieurs mesures pour une correction suffisante, des messages ou une symbologie spécifique peuvent s'afficher sur l'écran de l'interface IHS du système de recalage pour inviter l'utilisateur de réitérer le recalage en regardant dans une autre direction et des matrices de correction M01 et M3t peuvent être calculées après la dernière itération.

Il est à remarquer que lorsqu'une image d'un capteur, par exemple une caméra infrarouge, fixe par rapport à l'aéronef est utilisée, en considérant que l'axe du capteur est connu et invariable, la solution décrite ici corrige uniquement les erreurs de détection de posture DDP, c'est à dire la matrice de rotation M01, mais pas celles sur les attitudes de l'aéronef, c'est-à-dire la matrice de rotation M3t, et cela a l'avantage de réduire le nombre de mesures requises.

Il est recommandé d'effectuer cette procédure d'harmonisation au sol, ou si cela s'avère nécessaire en cours de vol, lors d'une phase de vol peu dynamique, idéalement en vol à plat et rectiligne afin d'optimiser l'efficacité des calculs.

Ensuite dans une huitième étape 218, les nouvelles matrices corrigées de rotation M01 et M3t sont appliquées sur toutes les informations de pilotage conformes (symbologie et images de terrain SVS) jusqu'à une prochaine opération de recalage.

Suivant un premier mode de réalisation du procédé de recalage et une première configuration du système d'affichage HMD, une série d'un nombre entier N, supérieur ou égal à 3, de mesures identifiées par l'indice « i » variant de 1 à N sont effectuées en supposant que les trois degrés de liberté angulaire correspondant à la matrice M01 de correction à droite des mesures d'attitude de la tête fournies par le sous-système de détection de posture DDP sont tous erronés de manière fixe dans le temps et que les trois degrés de liberté de l'attitude de l'aéronef fournis par le dispositif inertiel D3 et correspondants à la matrice M3t de correction à gauche des mesures d'attitude de la tête fournis par le sous-système de détection de posture DDP sont tous erronés de manière fixe dans le temps.

Suivant ce premier mode de réalisation particulier et la Figure 4, la septième étape est désignée par la référence numérique 302.

Dans cette septième étape 302, le calculateur d'harmonisation résout le système d'équations d'harmonisation duale suivantes : $\hat{U}_i = \hat{G} \cdot \hat{K}_i \cdot \hat{D}$, i variant de 1 à N, dans lequel :

.- la matrice $\hat{G}$ de correction à gauche qui n'est autre que la matrice de passage M3t que l'on cherche ici ;
.- les matrices $\hat{K}_i$, i variant de 1 à N, sont les matrices de mesures et de rotations correspondant pour chaque mesure identifié par l'indice parcours aux angles d'attitude de la tête fournis par le sous-système de détection de posture

DDP ;

.- la matrice $\hat{D}$ de correction à droite est la matrice M01 que l'on cherche ici permettant de passer du repère de l'afficheur au premier élément de poursuite mobile D1 du sous-système de détection de posture DDP ;

.- les matrices $\hat{U}_i$, i variant de 1 à N, sont les matrices de détection de posture utile attendue ou théorique correspondantes pour chaque mesure identifié par l'indice parcours « i ».

Pour résoudre l'équation d'harmonisation, la septième étape 302 utilise l'algorithme de la première configuration décrit dans la demande de brevet français, intitulée « Procédé et système d'harmonisation duale et conjointe d'un système de détection de posture » et déposée à la même date que la présente demande de brevet français. La septième étape 302 met en œuvre un premier ensemble 312 de première, deuxième, troisième sous-étapes 314, 316, 318.

Dans une première sous-étape 314, on choisit une mesure "pivot", par exemple la première mesure correspondant à i égal à 1.

On peut alors vérifier que pour $i = 2, \cdots, N$ on a : $\hat{U}_1^T \cdot \hat{U}_i = \hat{D}^T \cdot \hat{K}_1^T \cdot \hat{K}_i \cdot \hat{D}$.

Ainsi, en notant $\hat{U}_{1,i} = \hat{U}_1^T \cdot \hat{U}_i$ et $\hat{K}_{1,i} = \hat{K}_1^T \cdot \hat{K}_i$, on a : $\hat{D} \cdot \hat{U}_{1,i} = \hat{K}_{1,i} \cdot \hat{D}$.

Dans la première sous-étape 314, pour $i = 2, \cdots, N$ on calcule ainsi les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$

Puis, dans une deuxième sous-étape 316, on termine la réduction du système d'équations : $\hat{U}_i = \hat{G} \cdot \hat{K}_i \cdot \hat{D}$, i variant de 1 à N en utilisant le fait que ces dernières équations sont mathématiquement équivalentes à : $\hat{D} \cdot \vec{u}_i = \vec{k}_i$, où les $\vec{u}_i$ et $\vec{k}_i$ sont respectivement les vecteurs unitaires principaux des rotations $\hat{U}_{1,i}$ et $\hat{K}_{1,i}$.

Ainsi, dans la deuxième sous-étape 316, on détermine de manière connue pour $i = 2, \cdots, N$, les vecteurs unitaires principaux des rotations $\hat{U}_{1,i}$ et $\hat{K}_{1,i}$, désignés respectivement par $\vec{u}_i$ et $\vec{k}_i$.

Ensuite dans une troisième sous-étape 318, on calcule la matrice droite $\hat{D}$ ou M01 à l'aide de l'équation :

$$\widehat{D} = \pi \left( \sum_{i \geq 2} \left( \vec{k}_i \cdot \vec{u}_i^{\,T} \right) \right)$$

dans laquelle $\pi(.)$ désigne un un opérateur de redressement ou de projection qui transforme une matrice quelconque A en une matrice carré 3x3 de rotation $\pi(A)$ la plus proche au sens des moindres carrés sur l'ensemble des termes de la matrice $\pi(A) - A$ dans l'ensemble des matrices de rotation 3 x3.

Ensuite, dans une quatrième sous-étape 320, la matrice $\hat{G}$ de rotation à gauche $\hat{G}$ ou M3t est déterminée à partir de la matrice $\hat{D}$, calculée dans la troisième sous-étape 318, à l'aide de l'équation :

$$\widehat{G} = \pi \left( \sum_{i \geq 1} \left( \widehat{U}_i \cdot \widehat{D}^T \cdot \widehat{K}_i^{\,T} \right) \right)$$

Il est à remarquer que l'étude mathématique de la projection $\pi$ montre que le choix du pivot parmi les N mesures est sans influence sur le résultat final de l'harmonisation.

Il est à remarquer également que l'étude mathématique de la projection $\pi$ montre que le choix de déterminer d'abord $\hat{D}$ puis $\hat{G}$ est lui aussi sans influence ; on peut aussi commencer par éliminer $\hat{D}$ en faisant $\hat{U}_i \cdot \hat{U}_1^T = \hat{G} \cdot \hat{K}_i \cdot \hat{K}_1^T \cdot \hat{G}^T$ et résoudre de même.

Cette première configuration qui peut corriger jusqu'à six degrés de liberté exige comme contraintes d'utilisation que le nombre minimum de mesures N est supérieure ou égal à 3, les axes des rotations $\hat{U}_i$ étant distincts pour au moins trois valeurs d'indice « i » différents.

Ce premier mode de réalisation du procédé de recalage n'est pas nécessaire et vraiment utile dans le cas d'autres configurations du système d'affichage dans lesquelles le nombre des degrés de liberté angulaires erronées est strictement inférieur à 6 et supérieur ou égal à 1.

En effet, les angles de tangage et roulis de l'aéronef fournis par le dispositif inertiel d'attitude lié à la plateforme de l'aéronef généralement le plus souvent connus avec une précision suffisante pour un affichage conforme. Par contre, l'angle de lacet de l'aéronef, correspondant au cap (en anglais « heading »), est généralement connu avec une moins bonne précision, en particulier sur les petits appareils civils ne possédant pas de centrale inertielle précise. Seul cet angle de cap est dès lors intéressant à corriger. Quant à l'erreur d'orientation de l'afficheur par rapports aux éléments fixes sur l'équipement tête haute portée servant à la détection de posture DDP, les angles de liberté peuvent être limités à deux voire un seul angle, par exemple si le mécanisme permettant de déplacer l'afficheur en dehors du champ de vision de son utilisateur consiste en un pivot sur un seul axe. Dans ce cas, une procédure de recalage simplifié à une seule visée peut permettre de corriger les erreurs du système et suffire pour obtenir une conformité suffisante de la symbologie en tête haute portée, avec une procédure facile à mettre en œuvre par l'utilisateur.

Suivant un deuxième mode de réalisation du procédé de recalage et une première configuration du système d'affichage HMD, une série d'un nombre entier N, supérieur ou égal à 4, de mesures identifiées par l'indice « i » variant de 1 à N sont effectuées en supposant que les trois degrés de liberté angulaire correspondant à la matrice M01 de correction à droite des mesures d'attitude de la tête fournis par le sous-système de détection de posture DDP sont tous erronés de manière fixe dans le temps et qu'un seul degré de liberté angulaire, le degré de liberté de l'angle de cap, parmi les angles d'attitude de l'aéronef fournis par le dispositif inertiel D3 correspondants à la matrice M3t de correction à gauche des mesures d'attitude de la tête fournis par le sous-système de détection de posture DDP, est erroné de manière fixe dans le temps.

Suivant ce deuxième mode de réalisation particulier et la Figure 4, la septième étape est désignée par la référence numérique 402.

Dans cette septième étape 402, le calculateur d'harmonisation résout toujours le système d'équations d'harmonisation duale suivantes : $\hat{U}_i = \hat{G} \cdot \hat{K}_i \cdot \hat{D}$, i variant de 1 à N, mais cette fois-ci en supposant que seule la valeur de gisement des matrices de DDP calculées $\hat{K}_i$ est inexacte ou non calculée, en tout cas inexploitable.

La traduction mathématique de cette mauvaise connaissance de la valeur de gisement est d'écrire dans la première étape que pour tout i, variant de 1 à N, la matrice $\hat{K}_i$ se décompose suivant la décomposition : $\hat{K}_i = \hat{\Psi}_i \cdot \hat{Q}_i$, où

$$\begin{pmatrix} \cos \psi i & -\sin \psi i & 0 \\ \sin \psi i & \cos \psi i & 0 \\ 0 & 0 & 1 \end{pmatrix} ;$$

$\hat{\Psi}_i$ est une matrice de rotation inconnue de forme élémentaire en gisement : et

$\hat{Q}_i$ est une matrice de rotation connue.

Ainsi, les équations générales de départ $\hat{U}_i = \hat{G} \cdot \hat{K}_i \cdot \hat{D}$, i variant de 1 à N se ramène à : $\hat{U}_i = \hat{G} \cdot \hat{\Psi}_i \cdot \hat{Q}_i \cdot \hat{D}$ pour i variant de 1 à N.

Pour résoudre le système des équations d'harmonisation $\hat{U}_i = \hat{G} \cdot \hat{\Psi}_i \cdot \hat{Q}_i \cdot \hat{D}$ pour i variant de 1 à N, la septième étape 402 utilise l'algorithme de la deuxième configuration décrit dans la demande de brevet français, intitulée « Procédé d'harmonisation duale d'un sous-système de détection de posture DDP intégré dans un système de visualisation tête haute porté » et déposée à la même date que la présente demande de brevet français. La septième étape 402 met en œuvre un premier ensemble 412 de quatrième, cinquième, sixième sous-étapes 414, 416, 418.

Dans la quatrième sous-étape 414, pour i = 2,···,N, on calcule les matrices $\hat{U}_{1,i}$ et les vecteurs $\vec{q}_i$ à l'aide des équations :

$$\hat{U}_{1,i} = \hat{U}_1^T \cdot \hat{U}_i \text{ et } \vec{q}_i = \hat{Q}_i^T \cdot \vec{k},$$

$$\vec{k} = \begin{pmatrix} 0 \\ 0 \\ 1 \end{pmatrix}.$$

le vecteur $\vec{k}$ étant défini par l'équation

Puis, dans une cinquième sous-étape 416 d'initialisation, on initialise une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$, $I_3$ désignant la matrice identité.

Ensuite, on répète une sixième sous-étape itérative 418 faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i \geq 2}\left(\hat{U}_{1,i} \cdot \hat{D}_{[s]}^T \cdot \vec{q}_i\right)}{\left\|\sum_{i \geq 2}\left(\hat{U}_{1,i} \cdot \hat{D}^T \cdot \vec{q}_i\right)\right\|}$$

$$\hat{D}_{[s+1]} = \pi\left(\sum_{i \geq 2}\left(\vec{q}_i \cdot \vec{d}_{[s+1]}^T \cdot \hat{U}_{1,i}\right)\right)$$

la suite $\overline{\{d_{[s]}\}}$ désignant une deuxième suite auxiliaire de vecteurs et la suite $\{\hat{D}_{[s]}\}$ convergeant vers $\hat{D}$.

Puis, on calcule $\hat{D}$ comme une limite ou une limite approchée de la suite $\hat{D}_{[s]}$ qui est convergente en arrêtant dans une septième sous-étape 420 le processus itératif effectué au travers de la sixième sous-étape lorsque la limite $\hat{D}$ est approximée avec une précision suffisante définie par une valeur de seuil prédéterminée.

De manière similaire, la septième étape 402 de calcul est appliqué pour déterminer la matrice $\hat{G}$, en créant au départ un pivot par la droite dans le système des équations $\hat{U}_i = \hat{G} \cdot \hat{\Psi}_i \cdot \hat{Q}_i \cdot \hat{D}$ pour i variant de 1 à N.

Cette deuxième configuration exige comme contraintes d'utilisation que le nombre minimum de mesures N est supérieure ou égal à 4, les axes des rotations $\hat{U}_i$ étant distincts pour au moins trois valeurs d'indice « i » différents.

Outre l'économie d'un instrument, l'unité d'axe de visée de référence BRU, le procédé et le système de recalage de la symbologie conforme selon l'invention ont une performance de correction accrue qui englobe également les erreurs d'attitude de l'aéronef. En effet, l'utilisation par le procédé de recalage d'une référence extérieure à la place d'une référence intérieure au cockpit permet de corriger les erreurs résiduelles sur les valeurs de tangage, roulis et tout particulièrement de cap de l'aéronef. Cet avantage est très important, en particulier pour les petits aéronefs civils pour lesquels l'angle de cap est la valeur connue avec le moins de précision compte tenu que lesdits petits aéronefs civils ne possèdent pas de centrale inertielle ni d'AHRS vraiment précise.

## Revendications

1. Procédé de recalage d'un affichage tête haute porté via un système de visualisation synthétique SVS d'informations de pilotage d'un aéronef conformes avec le monde réel extérieur,
   le procédé de recalage étant mis en œuvre par un système d'affichage tête haute porté comprenant :

   .- un afficheur (12) D0 tête haute porté,
   .- un sous-système de détection de posture de tête DDP (36) ayant un premier élément mobile de poursuite (18) D1 attaché solidairement à l'afficheur D0, un deuxième élément fixe (22) D2 lié solidairement à la plateforme (24) de l'aéronef, et un moyen (26) de mesure et de détermination de l'orientation relative M12 du premier élément mobile de poursuite (18) D1 par rapport à un repère de référence du deuxième élément fixe (22) D2 lié à la plateforme,
   .- un dispositif inertiel (30) D3 de fourniture de l'attitude relative M3t de la plateforme par rapport à la Terre et un dispositif (32) Dp de fourniture de la position de l'aéronef par rapport à la Terre,
   .- un Système de Vision Synthétique (34) de fourniture d'une image de terrain synthétique sur l'afficheur D0, asservie à et fonction de :

       . * la position et l'attitude relative M3t de l'aéronef mesurées respectivement par le dispositif de positionnement de l'aéronef et le dispositif inertiel, et
       . * l'orientation relative M12 du premier élément mobile de poursuite D1 par rapport au deuxième élément fixe D2 du sous-système de détection de posture; et

   .- un sous-système d'harmonisation duale pour aligner l'afficheur D0, le sous-système de détection de posture DDP et le dispositif inertiel (30) D3 entre eux,

   le procédé de recalage étant **caractérisé en ce qu'**il comprend des étapes consistant à :

       .- lancer (204) le procédé de recalage, en activant un mode de recalage à un instant de début t1c d'état de recalage, en affichant tout ou partie d'informations de pilotage conformes, mises dans un état recalage, figées sur l'afficheur par rapport au mouvement de l'élément mobile de poursuite D1 et libres par rapport au mouvement de l'aéronef, et mémorisant ensemble l'instant de début t1c d'état de recalage et l'orientation relative correspondante entre le premier élément mobile de poursuite D1 et le deuxième élément fixe D2 du sous-système de détection de posture DDP ; puis
       .- effectuer (206, 208, 210,212, 214) une série d'un nombre prédéterminé N de mesures d'orientations relatives $\hat{K}_i$, i variant de 1 à N, du premier élément de poursuite D1 par rapport au deuxième élément fixe D2, lié à la plateforme, du sous-système de détection de posture DDP (16), correspondant à des visées Vi, i variant de 1 à N, dans lesquelles des éléments différents des informations de pilotage mises dans l'état de recalage sont superposés avec des amers correspondants du monde réel extérieur ; puis
       .- par un algorithme d'harmonisation duale, déterminer (216) conjointement l'orientation relative M01 entre l'afficheur D0 et l'élément mobile de poursuite D1 et l'orientation M3t relative du dispositif inertiel D3 par rapport à la Terre à partir des matrices de rotation $\hat{K}_t$ mesurées par le sous-système DDP, et des matrices théoriques $\hat{U}_t$ de rotation de DDP attendues correspondantes, étant supposé que l'orientation relative du deuxième élément fixe D2 par rapport au dispositif inertiel d'attitude D3 est égale en permanence à la matrice identité de rang 3.

2. Procédé de recalage d'un affichage tête haute porté via un système de visualisation synthétique SVS d'informations de pilotage d'un aéronef conformes avec le monde réel extérieur selon la revendication 1, dans lequel les informations de pilotage conformes sont comprises dans l'ensemble formé d'une symbologie conforme, notamment une piste d'atterrissage synthétique, d'une représentation synthétique de terrain SVS et d'une image issue d'un capteur électromagnétique, notamment une caméra infrarouge.

3. Procédé de recalage d'un affichage tête haute porté via un système de visualisation synthétique SVS d'informations de pilotage d'un aéronef conformes avec le monde réel extérieur selon l'une quelconque des revendications 1 à 2, comprenant en outre une étape (218) dans laquelle les matrices de correction droite M01 et de correction gauche M3t harmonisées sont fournies au système de vision synthétique SVS, le mode de recalage est désactivé par le sous-système d'harmonisation, et le système de vision synthétique SVS recale son affichage en appliquant les matrices de correction recalées M01 et M3t.

4. Procédé de recalage d'un affichage tête haute porté via un système de visualisation synthétique SVS d'informations de pilotage d'un aéronef conformes avec le monde réel extérieur selon l'une quelconque des revendications 1 à 3, dans lequel l'algorithme d'harmonisation duale calcule la matrice d'orientation relative M01 entre l'afficheur D0 et l'élément de poursuite du sous-système DDP et la matrice d'orientation relative M3t du dispositif inertiel d'attitude D3, lié à l'aéronef, par rapport à la Terre respectivement comme la matrice de rotation de correction à droite $\hat{D}$ et la matrice de rotation de correction à gauche $\hat{G}$ comme solutions conjointes du système d'équations d'harmonisation duale : $\hat{U}_i = \hat{G} \cdot \hat{K}_i \cdot \hat{D}$, i variant de 1 à N

5. Procédé de recalage d'un affichage tête haute porté via un système de visualisation synthétique SVS d'informations de pilotage d'un aéronef conformes avec le monde réel extérieur selon la revendication 4, dans lequel le minimum du nombre de mesures N requis dépend du nombre L de degrés de liberté angulaire des rotations M01 et M3t du système d'affichage erronées ou inexploitables, ledit nombre L étant un entier supérieur ou égal à 1 et inférieur ou égal à 6, et la résolution du système d'équations $\hat{U}_i = \hat{G} \cdot \hat{K}_i \cdot \hat{D}$, i variant de 1 à N utilise un opérateur de redressement $\pi(.)$ qui transforme une matrice quelconque A en une matrice carrée 3x3 de rotation $\pi(A)$ la plus proche au sens des moindres carrés sur l'ensemble des termes de la matrice $\pi(A) - A$ sur l'ensemble des matrice de rotation 3 x3, pour déterminer la matrice de rotation à droite $\hat{D}$ et la matrice de rotation à gauche $\hat{G}$.

6. Procédé de recalage d'un affichage tête haute porté via un système de visualisation synthétique SVS d'informations de pilotage d'un aéronef conformes avec le monde réel extérieur selon la revendications 5, dans lequel :

le nombre N est supérieur ou égal à 3,
l'étape (302) de résolution du système d'équations d'harmonisation duale comprend un premier ensemble (312) de sous étapes consistant à :

.- dans une première sous-étape (314), choisir une mesure "pivot" comme étant la première mesure parmi les N mesures et correspondant à i égal à 1, et pour i = 2, ···, $N$ on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis
.- dans une deuxième sous-étape (316), déterminer pour i = 2,···,$N$ , les vecteurs unitaires principaux des rotations $\hat{U}_{1,i}$ et $\hat{K}_{1,i}$, désignés respectivement par $\vec{u}_i$ et $\vec{k}_i$ ; ensuite
.- dans une troisième sous-étape (318), calculer la matrice droite $\hat{D}$, i.e. M01, à l'aide de l'équation :

$$\widehat{D} = \pi\left(\sum_{i \geq 2}\left(\vec{k}_i \cdot \vec{u}_i^{\,T}\right)\right)$$

ensuite

.- dans une quatrième sous-étape (320), déterminer la matrice de rotation à gauche $\hat{G}$ ; i.e. M3t, à partir de la matrice $\hat{D}$ calculée dans la troisième sous-étape (318), à l'aide de l'équation :

$$\widehat{G} = \pi\left(\sum_{i \geq 1}\left(\widehat{U}_i \cdot \widehat{D}^T \cdot \widehat{K}_i^{\,T}\right)\right)$$

7. Procédé de recalage d'un affichage tête haute porté via un système de visualisation synthétique SVS d'informations de pilotage d'un aéronef conformes avec le monde réel extérieur selon l'une quelconque des revendications 4 à 5, dans lequel :

le nombre de degrés de liberté angulaire de la rotation à droite $\hat{D}$, c'est-à-dire la matrice M01, erronés ou inexploitables, est égal à trois et le seul degré de liberté angulaire erroné ou inexploitable de la rotation à gauche $\hat{G}$, c'est-à-dire la matrice M3t, est l'angle de cap, étant supposé que les angles de tangage et de roulis sont supposés connus avec une précision suffisante ; et
le nombre total N de mesures est supérieur ou égal à 4, et
l'étape (402) de résolution du système d'équations d'harmonisation duale comprend un premier ensemble (412) de sous étapes consistant à

.- dans une quatrième sous-étape (414), pour i = 2, $\cdots$, N, calculer les matrices $\hat{U}_{1,i}$ et les vecteurs $\vec{q}_i$ à l'aide des équations :

$$\widehat{U}_{1,i} = \widehat{U}_1^{\,T} \cdot \widehat{U}_i \text{ et } \vec{q}_i = \widehat{Q}_i^{\,T} \cdot \vec{k},$$

$$\vec{k} = \begin{pmatrix} 0 \\ 0 \\ 1 \end{pmatrix} ;$$

le vecteur $\vec{k}$ étant défini par l'équation                          puis
.- dans une cinquième sous-étape (416) d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$, $I_3$ désignant la matrice identité ; ensuite
.- répéter une sixième sous-étape itérative (418) faisant passer de l'itération [s] à [s+1] en calculant la valeur vectorielle $\overline{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i \geq 2}\left(\widehat{U}_{1,i} \cdot \widehat{D}_{[s]}^T \cdot \vec{q}_i\right)}{\left\|\sum_{i \geq 2}\left(\widehat{U}_{1,i} \cdot \widehat{D}^T \cdot \vec{q}_i\right)\right\|}$$

$$\widehat{D}_{[s+1]} = \pi\left(\sum_{i \geq 2}\left(\vec{q}_i \cdot \vec{d}_{[s+1]}^T \cdot \widehat{U}_{1,i}\right)\right)$$

la suite $\overline{\{d_{[s]}\}}$ désignant une deuxième suite auxiliaire de vecteurs et la suite $\{\hat{D}_{[s]}\}$ convergeant vers $\hat{D}$ ;
.- arrêter dans une septième sous-étape (420) le processus itératif effectué au travers de la sixième sous-étape (418) lorsque la limite $\hat{D}$ est approximée avec une précision suffisante définie par une valeur de seuil prédéterminée.

8. Procédé de recalage d'un affichage tête haute porté via un système de visualisation synthétique SVS d'informations de pilotage d'un aéronef conformes avec le monde réel extérieur selon l'une quelconque des revendications 1 à 7, dans lequel :
le nombre totale N de mesures est ajusté en fonction du nombre L de degrés de liberté à corriger du système d'affichage et de la précision souhaitée de l'estimation des matrices de rotation à droite et à gauche, $\hat{D}$ et $\hat{G}$.

9. Système d'affichage tête haute porté d'informations de pilotage d'un aéronef, conformes au monde réel extérieur et fournies via un système de visualisation synthétique SVS, comprenant :

> .- un afficheur (12) D0 tête haute porté, et
> .- un sous-système de détection de posture de tête DDP (16) ayant un premier élément mobile de poursuite (18) D1, attaché solidairement à l'afficheur D0, un deuxième élément fixe (22) D2 lié solidairement à la plateforme (24) de l'aéronef, et un moyen (26) de mesure et de détermination de l'orientation relative M12 du premier élément mobile de poursuite (18) D1 par rapport à un repère de référence du deuxième élément fixe (22) D2 lié à la plateforme (24), et
> .- un dispositif inertiel (30) D3 de fourniture d'une attitude relative M3t de la plateforme (24) par rapport à un repère terrestre,
> .- un dispositif (32) Dp de fourniture de la position de l'aéronef par rapport à la Terre, et
> .- un Système de Vision Synthétique SVS (34) de fourniture d'une image de terrain synthétique sur l'afficheur D0, asservie à et fonction de :
>
> > . * la position et l'attitude relative M3t de l'aéronef mesurées respectivement par le dispositif de positionnement de l'aéronef et le dispositif inertiel d'attitude D3, et
> > . * l'orientation relative M12 du premier élément mobile de poursuite D1 par rapport au deuxième élément fixe D2 du sous-système de détection porteuse DDP; et
>
> .- un sous-système d'harmonisation pour aligner l'afficheur D0, le sous-système de détection de posture DDP, et le dispositif inertiel s'attitude D3, entre eux,

le système d'affichage tête haute porté d'informations de pilotage conformes au monde réel extérieur terrestre étant **caractérisé en ce que** :

> .- le sous-système d'harmonisation (36) comporte un calculateur d'harmonisation duale (38) et une interface homme-système IHS (40) intégrant une fonction de recalage de l'affichage en tête haute conforme ; et
> .- le sous-système d'harmonisation duale (36) est configuré pour :
>
> > .- lancer (204) le procédé de recalage, en activant un mode de recalage à un instant de début t1c d'état de recalage, en affichant tout ou partie d'informations de pilotage conformes, mises dans un état recalage, figées sur l'afficheur par rapport au mouvement de l'élément mobile de poursuite D1 et libres par rapport au mouvement de l'aéronef, et mémorisant ensemble l'instant de début t1c d'état de recalage et l'orientation relative correspondante entre le premier élément mobile de poursuite D1 et le deuxième élément fixe D2 du sous-système de détection de posture DDP ; puis
> > .- effectuer (206, 208, 210,212, 214) une série d'un nombre prédéterminé N de mesures d'orientations relatives $\hat{K}_i$, i variant de 1 à N, du premier élément de poursuite D1 par rapport au deuxième élément fixe D2, lié à la plateforme, du sous-système de détection de posture DDP (16), correspondant à des visées Vi, i variant de 1 à N, dans lesquels des éléments différents des informations de pilotage mises dans l'état de recalage sont superposés avec des amers correspondants du monde réel extérieur ; puis
> > .- par un algorithme d'harmonisation duale, déterminer (216) conjointement l'orientation relative M01 entre l'afficheur D0 et l'élément mobile de poursuite D1 et l'orientation M3t relative du dispositif inertiel D3 par rapport à la Terre à partir des matrices de rotation $\hat{K}_i$ mesurées par le sous-système DDP, et des matrices théoriques $\hat{U}_i$ de rotation de DDP attendues correspondantes, étant supposé que l'orientation relative du deuxième élément fixe D2 par rapport au dispositif inertiel d'attitude D3 est égale en permanence à la matrice identité de rang 3.

10. Système d'affichage tête haute porté d'informations de pilotage d'un aéronef, conformes au monde réel extérieur et fournies via un système de visualisation synthétique SVS, selon la revendication 9, dans lequel le sous-système d'harmonisation est configuré pour calculer la matrice d'orientation relative M01 entre l'afficheur D0 et l'élément de poursuite du sous-système DDP et la matrice d'orientation relative M3t du dispositif inertiel d'attitude D3, lié à l'aéronef, par rapport à la Terre respectivement comme la matrice de rotation de correction à droite $\hat{D}$ et la matrice de rotation de correction à gauche $\hat{G}$ comme solutions conjointes du système d'équations : $\hat{U}_i = \hat{G} \cdot \hat{K}_i \cdot \hat{D}$, i variant de 1 à N.

11. Système d'affichage tête haute porté d'informations de pilotage d'un aéronef, conformes au monde réel extérieur et fournies via un système de visualisation synthétique SVS, selon la revendication 10, dans lequel

le minimum du nombre de mesures N requis dépend du nombre L de degrés de liberté angulaire des rotations M01 et M3t du système d'affichage erronées ou inexploitables, ledit nombre étant un entier supérieur ou égal à 1 et inférieur ou égal à 6, et

la résolution du système d'équations $\hat{U}_i = \hat{G} \cdot \hat{K}_i \cdot \hat{D}$, i variant de 1 à N utilise un opérateur de redressement $\pi(.)$ qui transforme une matrice quelconque A en une matrice carrée 3x3 de rotation $\pi(A)$ la plus proche au sens des moindres carrés sur l'ensemble des termes de la matrice $\pi(A)$ - $A$ sur l'ensemble des matrice de rotation 3 x3, pour déterminer la matrice de rotation à droite $\hat{D}$ et la matrice de rotation à gauche $\hat{G}$.

**12.** Système d'affichage tête haute porté d'informations de pilotage d'un aéronef, conformes au monde réel extérieur et fournies via un système de visualisation synthétique SVS, selon la revendication 11, dans lequel

.- le nombre N est supérieur ou égal à 3, et

.- le calculateur d'harmonisation duale est configuré pour mettre en œuvre une étape (302) de résolution du système d'équations d'harmonisation duale en exécutant un premier ensemble (312) de sous étapes consistant à :

.- dans une première sous-étape (314), choisir une mesure "pivot" comme étant la première mesure parmi les N mesures et correspondant à i égal à 1, et pour i = 2, ···, N on calcule les matrices de rotations $\hat{U}_{1,i}$ et $\hat{K}_{1,i}$ à l'aide des équations : $\hat{U}_{1,i} = \hat{U}_1^T \cdot \hat{U}_i$ et $\hat{K}_{1,i} = \hat{K}_1^T \cdot \hat{K}_i$ ; puis

.- dans une deuxième sous-étape (316), i, déterminer pour i = 2,···,N, les vecteurs unitaires principaux des rotations $\hat{U}_{1,i}$ et $\hat{K}_{1,i}$, désignés respectivement par $\vec{u}_i$ et $\vec{k}_i$ ; ensuite

.- dans une troisième sous-étape (318), calculer la matrice droite $\hat{D}$, i.e. M01, à l'aide de l'équation :

$$\widehat{D} = \pi \left( \sum_{i \geq 2} \left( \vec{k}_i \cdot \vec{u}_i^{\ T} \right) \right)$$

ensuite

.- dans une quatrième sous-étape (320), déterminer la matrice de rotation à gauche $\hat{G}$ ; i.e. M3t, à partir de la matrice $\hat{D}$ calculée dans la troisième sous-étape 318, à l'aide de l'équation :

$$\widehat{G} = \pi \left( \sum_{i \geq 1} \left( \widehat{U}_i \cdot \widehat{D}^T \cdot \widehat{K}_i^{\ T} \right) \right)$$

**13.** Système d'affichage tête haute porté d'informations de pilotage d'un aéronef, conformes au monde réel extérieur et fournies via un système de visualisation synthétique SVS, selon la revendication 11, dans lequel

.- le nombre de degrés de liberté angulaire de la rotation à droite $\hat{D}$, c'est-à-dire la matrice M01, erronés ou inexploitables, est égal à trois et le seul degré de liberté angulaire erroné ou inexploitable de la rotation à gauche $\hat{G}$, c'est-à-dire la matrice M3t, est l'angle de cap, étant supposé que les angles de tangage et de roulis sont supposés connus avec une précision suffisante ; et

.- le nombre total N de mesures est supérieur ou égal à 4, et

.- le calculateur d'harmonisation duale conjointe est configuré pour mettre en œuvre une étape (402) de résolution du système d'équations d'harmonisation duale en exécutant un premier ensemble (412) de sous étapes consistant à

.- dans une quatrième sous-étape (414), pour i = 2,···,N, calculer les matrices $\hat{U}_{1,i}$ et les vecteurs $\vec{q}_i$ à l'aide des équations :

$$\widehat{U}_{1,i} = \widehat{U}_1^{\ T} \cdot \widehat{U}_i \ \text{et} \ \vec{q}_i = \widehat{Q}_i^{\ T} \cdot \vec{k},$$

$$\vec{k} = \begin{pmatrix} 0 \\ 0 \\ 1 \end{pmatrix} ;$$

le vecteur $\vec{k}$ étant défini par l'équation puis

.- dans une cinquième sous-étape (416) d'initialisation, initialiser une première suite de matrices $\{\hat{D}_{[s]}\}$, [s] désignant le rang entier courant de parcours de la suite $\{\hat{D}_{[s]}\}$, en mettant $\hat{D}_{[0]}$ égale à $I_3$ , $I_3$ désignant la matrice identité ; ensuite

.- répéter une sixième sous-étape itérative (418) faisant passer de l'itération [s] à [s+1] en calculant la valeur vectorielle $\vec{d}_{[s+1]}$, puis la valeur $\hat{D}_{[s+1]}$ de la première suite matricielle $\{\hat{D}_{[s]}\}$, à l'aide des équations suivantes :

$$\vec{d}_{[s+1]} = \frac{\sum_{i \geq 2}\left(\hat{U}_{1,i} \cdot \hat{D}_{[s]}^T \cdot \vec{q}_i\right)}{\left\|\sum_{i \geq 2}\left(\hat{U}_{1,i} \cdot \hat{D}^T \cdot \vec{q}_i\right)\right\|}$$

$$\hat{D}_{[s+1]} = \pi\left(\sum_{i \geq 2}\left(\vec{q}_i \cdot \vec{d}_{[s+1]}^T \cdot \hat{U}_{1,i}\right)\right)$$

la suite $\{\vec{d}_{[s]}\}$ désignant une deuxième suite auxiliaire de vecteurs et la suite $\{\hat{D}_{[s]}\}$ convergeant vers $\hat{D}$ ; et

.- arrêter dans une septième sous-étape (420) le processus itératif effectué au travers de la sixième sous-étape (418) lorsque la limite $\hat{D}$ est approximée avec une précision suffisante définie par une valeur de seuil prédéterminée.

14. Système d'affichage tête haute porté d'informations de pilotage d'un aéronef, conformes au monde réel extérieur et fournies via un système de visualisation synthétique SVS, selon l'une quelconque des revendications 9 à 13, dans lequel

le sous-système d'harmonisation duale est configuré lors de la mise en œuvre des mesures de recalage pour représenter les informations de pilotage servant aux visées, c'est-à-dire la symbologie et/ou la représentation synthétique du terrain et/ou l'image d'un capteur électromagnétique suivant un mode de représentation propre au mode de mesure par une couleur ou de style de trait distinctif.

**Patentansprüche**

1. Verfahren zum Neueinstellen eines getragenen Head-up-Display über ein synthetisches Visualisierungssystem SVS für Informationen zum Steuern eines Flugzeugs in Übereinstimmung mit der realen Außenwelt,

wobei das Neueinstellungsverfahren von einem getragenen Head-up-Display-System implementiert wird, das Folgendes umfasst:

.- ein getragenes Head-up-Display (12) DO;
.- ein Subsystem (36) zum Erkennen einer Kopfhaltung DDP mit einem ersten beweglichen Verfolgungselement (18) D1, das fest am Display D0 angebracht ist, einem unbeweglichen zweiten Element (22) D2, das fest mit der Plattform (24) des Flugzeugs verbunden ist, und ein Mittel (26) zum Messen und Bestimmen der relativen Orientierung M12 des ersten beweglichen Verfolgungselements (18) D1 relativ zu einer Referenzmarke des unbeweglichen zweiten Elements (22) D2, das mit der Plattform verbunden ist;
.- ein Trägheitsgerät (30) D3 zum Liefern der relativen Lage M3t der Plattform relativ zur Erde und ein Gerät (32) Dp zum Liefern der Position des Flugzeugs relativ zur Erde;
.- ein synthetisches Visualisierungssystem (34) zum Liefern eines synthetischen Bodenbildes auf dem Display D0, untergeordnet und abhängig von:

. * der Position und der relativen Lage M3t des Flugzeugs, jeweils von dem Gerät zum Positionieren des Flugzeugs und dem Trägheitsgerät gemessen; und
. * der relativen Orientierung M12 des ersten beweglichen Verfolgungselements D1 relativ zum unbeweglichen zweiten Element D2 des Haltungserkennungssubsystems; und

.- ein Subsystem für eine duale Harmonisierung zum Ausrichten des Display D0, des Haltungserkennungssubsystems DDP und des Trägheitsgeräts (30) D3 aufeinander;

wobei das Neueinstellungsverfahren **dadurch gekennzeichnet ist, dass** es die folgenden Schritte beinhaltet:

.- Starten (204) des Neueinstellungsverfahrens durch Aktivieren eines Neueinstellungsmodus zu einer Neueinstellungszustandsstartzeit t1c, durch Anzeigen aller oder einiger der in einen Neueinstellungszustand gesetzten übereinstimmenden Steuerinformationen, fixiert auf dem Display relativ zur Bewegung des beweglichen Verfolgungselements D1 und frei relativ zur Bewegung des Flugzeugs, und Speichern der Neieinstellungszustandsstartzeit t1c und der entsprechenden relativen Orientierung zwischen dem beweglichen ersten Verfolgungselement D1 und dem unbeweglichen zweiten Element D2 des Haltungserkennungssubsystems DDP zueinander; dann

.- Durchführen (206, 208, 210, 212, 214) einer Serie aus einer vorbestimmten Anzahl N von Messungen von relativen Orientierungen $\hat{K}_i$, wobei i von 1 bis N variiert, des ersten Verfolgungselements D1 relativ zu dem unbeweglichen zweiten Element D2, das mit der Plattform verbunden ist, des Haltungserkennungssubsystems DDP (16), entsprechend Ziellinien Vi, wobei i von 1 bis N variiert, wobei unterschiedliche Elemente der in den Neueinstellungszustand gesetzten Steuerinformationen mit entsprechenden Landmarken der realen Außenwelt überlagert sind; dann

.- gemeinsames Bestimmen (216), mit einem dualen Harmonisierungsalgorithmus, der relativen Orientierung M01 zwischen dem Display D0 und dem beweglichen Verfolgungselement D1 und der relativen Orientierung M3t des Trägheitsgeräts D3 relativ zur Erde auf der Basis der vom Subsystem DDP gemessenen Rotationsmatrizen $\hat{K}_i$ und der entsprechenden erwarteten theoretischen Rotationsmatrizen $\hat{U}_i$ von DDP, unter der Annahme, dass die relative Orientierung des unbeweglichen zweiten Elements D2 relativ zum Lageträgheitsgerät D3 permanent gleich der Identitätsmatrix von Reihe 3 ist.

2. Verfahren zum Neueinstellen eines getragenen Head-up-Display über ein synthetisches Visualierungssystem SVS für Informationen zum Steuern eines Flugzeugs in Übereinstimmung mit der realen Außenwelt nach Anspruch 1, wobei
die übereinstimmenden Steuerinformationen in dem Satz enthalten sind, der von einheitlichen Symbolen, insbesondere einer synthetischen Landebahn, von einer synthetischen Bodendarstellung SVS und von einem von einem elektromagnetischen Sensor, insbesondere einer Infrarotkamera, kommenden Bild gebildet wird.

3. Verfahren zum Neueinstellen eines getragenen Head-up-Display über ein synthetisches Visualierungssystem SVS für Informationen zum Steuern eines Flugzeugs in Übereinstimmung mit der realen Außenwelt nach einem der Ansprüche 1 bis 2, das ferner Folgendes beinhaltet:
einen Schritt (218), in dem das synthetische Visualisierungssystem SVS mit der harmonisierten rechten M01 und linken M3t Korrekturmatrix bereitgestellt wird, wobei der Neueinstellungsmodus durch das Harmonisierungssystem deaktiviert wird und das synthetische Visualisierungssystem SVS sein Display durch Anwenden der Neueinstellungskorrekturmatrizen M01 und M3t neu einstellt.

4. Verfahren zum Neueinstellen eines getragenen Head-up-Display über ein synthetisches Visualierungssystem SVS für Informationen zum Steuern eines Flugzeugs in Übereinstimmung mit der realen Außenwelt nach einem der Ansprüche 1 bis 3, wobei
der duale Harmonisierungsalgorithmus die relative Orientierungsmatrix M01 zwischen dem Display D0 und dem Verfolgungselement des Subsystems DDP und die relative Orientierungsmatrix M3t des Lageträgheitsgeräts D3 berechnet, mit dem Flugzeug verbunden, relativ zur Erde, jeweils als Rechtsrotationskorrekturmatrix $\hat{D}$ und Linksrotationskorrekturmatrix $\hat{G}$ als gemeinsame Lösungen des dualen Harmonisierungsgleichungssystems: $\hat{U}_i = \hat{G} \cdot \hat{K}_i \cdot \hat{D}$, wobei i von 1 bis N variiert.

5. Verfahren zum Neueinstellen eines getragenen Head-up-Display über ein synthetisches Visualierungssystem SVS für Informationen zum Steuern eines Flugzeugs in Übereinstimmung mit der realen Außenwelt nach Anspruch 4, wobei
die Mindestanzahl von benötigten Messungen N von der Anzahl L von Winkelfreiheitsgraden der Rotationen M01 und M3t des Anzeigesystems abhängig ist, die fehlerhaft oder unbrauchbar sind, wobei die Anzahl L eine ganze Zahl gleich oder größer als 1 oder gleich oder kleiner als 6 ist; und
die Auflösung des Gleichungssystems $\hat{U}_i = \hat{G} \cdot \hat{K}_i \cdot \hat{D}$, wobei i von 1 bis N variiert, einen Rückgewinnungsoperator $\pi(.)$ benutzt, der eine beliebige Matrix A in eine quadratische 3x3 Rotationsmatrix $\pi(A)$ umwandelt, die dem Sinn der kleinsten Quadrate auf allen Termen der Matrix $\pi(A) - A$ auf dem Satz von 3x3 Rotationsmatrizen am nächsten liegt, um die Rechtsrotationsmatrix $\hat{D}$ und die Linksrotationsmatrix $\hat{G}$ zu bestimmen.

**6.** Verfahren zum Neueinstellen eines getragenen Head-up-Display über ein synthetisches Visualierungssystem SVS für Informationen zum Steuern eines Flugzeugs in Übereinstimmung mit der realen Außenwelt nach Anspruch 5, wobei:

die Anzahl N gleich oder größer ist als 3;
der Schritt (302) des Auflösens des dualen Harmonisierungsgleichungssystems einen ersten Satz (312) von Teilschritten beinhaltet, die Folgendes beinhalten:

.- Auswählen, in einem ersten Teilschritt (314), einer "Pivot"-Messung als die erste Messung unter den N Messungen und entsprechend i gleich 1, und für i = 2,..., N Berechnen der Rotationsmatrizen $\hat{U}_{1,i}$ und $\hat{K}_{1,i}$ mit den Gleichungen: $\hat{U}_{1,i} = \hat{U}_1{}^T \cdot \hat{U}_i$ und $\hat{K}_{1,i} = \hat{K}_1{}^T \cdot \hat{K}_i$; dann
.- Bestimmen, in einem zweiten Teilschritt (316), für i = 2,..., N, der Haupteinheitsvektoren der Rotationen $\hat{U}_{1,i}$ und $\hat{K}_{1,i}$, jeweils bezeichnet mit $\vec{u}_i$ und $\vec{k}_i$; dann
.- Berechnen, in einem dritten Teilschritt (318), der rechten Matrix $\hat{D}$, d.h. M01, mit der Gleichung:

$$\hat{D} = \pi\left(\sum_{i \geq 2}\left(\vec{k}_i \cdot \vec{u}_i{}^T\right)\right);$$

dann
.- Bestimmen, in einem vierten Teilschritt (320), der Linksrotationsmatrix $\hat{G}$, d.h. M3t, auf der Basis der im dritten Teilschritt (318) berechneten Matrix $\hat{D}$ mit der Gleichung:

$$\hat{G} = \pi\left(\sum_{i \geq 1}\left(\hat{U}_i \cdot \hat{D}^T \cdot \hat{K}_i{}^T\right)\right).$$

**7.** Verfahren zum Neueinstellen eines getragenen Head-up-Display über ein synthetisches Visualierungssystem SVS für Informationen zum Steuern eines Flugzeugs in Übereinstimmung mit der realen Außenwelt nach einem der Ansprüche 4 bis 5, wobei:

die Anzahl von Winkelfreiheitsgraden der Rechtsrotation $\hat{D}$, d.h. der Matrix M01, die falsch oder unbrauchbar sind, gleich drei ist, und der einzige falsche oder unbrauchbare Winkelfreiheitsgrad der Linksrotation $\hat{G}$, d.h. Matrix M3t, der Steuerkurswinkel ist, unter der Annahme, dass die Nick- und Rollwinkel als mit ausreichender Präzision bekannt angenommen werden; und
die Gesamtzahl N von Messwerten gleich oder größer ist als 4; und
der Schritt (402) des Auflösens des dualen Harmonisierungsgleichungssystems einen ersten Satz (412) von Teilschritten beinhaltet, die Folgendes involvieren:

.- Berechnen, in einem vierten Teilschritt (414), für i = 2,..., N, der Matrizen $\hat{U}_{1,i}$ und der Vektoren $\vec{q}_i$ mit den Gleichungen:

$$\hat{U}_{1,i} = \hat{U}_1{}^T \cdot \hat{U}_i \quad \text{und} \quad \vec{q}_i = \hat{Q}_i{}^T \cdot \vec{k},$$

wobei der Vektor $\vec{k}$ durch die Gleichung $\vec{k} = \begin{pmatrix} 0 \\ 0 \\ 1 \end{pmatrix}$ definiert wird; dann

.- Initialisieren, in einem fünften Initialisierungsteilschritt (416), einer ersten Serie von Matrizen $\{\hat{D}_{[s]}\}$, wobei [s] die aktuelle ganze Reihe für den Verlauf der Serie $\{\hat{D}_{[s]}\}$ bezeichnet, durch Setzen von $\{\hat{D}_{[s]}\}$ auf gleich $I_3$, wobei $I_3$ die Identitätsmatrix bezeichnet; dann
.- Wiederholen eines sechsten iterativen Teilschritts (418), der bewirkt, dass die Iteration [s] zu [s+1] passiert, durch Berechnen des Vektorwertes $\vec{d}_{[s+1]}$, dann des Wertes $\hat{D}_{[s+1]}$ der ersten Matrixserie $\{\hat{D}_{[s]}\}$ mit den folgenden Gleichungen:

$$\vec{d}_{[s+1]} = \frac{\sum_{i \geq 2}(\hat{U}_{1,i} \cdot \hat{D}_{[s]}^{T} \cdot \vec{q}_i)}{\left\| \sum_{i \geq 2}(\hat{U}_{1,i} \cdot \hat{D}^{T} \cdot \vec{q}_i) \right\|}$$

$$\hat{D}_{[s+1]} = \pi \left( \sum_{i \geq 2}(\vec{q}_i \cdot \vec{d}_{[s+1]}^{T} \cdot \hat{U}_{1,i}) \right),$$

wobei die Serie $\overline{\{d_{[s]}\}}$ eine zweite zusätzliche Serie von Vektoren bezeichnet und die Serie $\{\hat{D}_{[s]}\}$ in Richtung $\hat{D}$ konvergiert;

.- Stoppen, in einem siebten Teilschritt (420), des durch den sechsten Teilschritt (418) durchgeführten iterativen Prozesses, wenn die Grenze $\hat{D}$ mit durch einen vorbestimmten Schwellenwert definierter ausreichender Präzision approximiert wird.

8. Verfahren zum Neueinstellen eines getragenen Head-up-Display über ein synthetisches Visualierungssystem SVS für Informationen zum Steuern eines Flugzeugs in Übereinstimmung mit der realen Außenwelt nach einem der Ansprüche 1 bis 7, wobei:
die Gesamtzahl N von Messungen in Abhängigkeit von der Anzahl L von in dem Anzeigesystem zu korrigierenden Freiheitsgraden und mit der gewünschten Präzision der Schätzung der Rechts- $\hat{D}$ und Links- $\hat{G}$ Rotationsmatrix justiert wird.

9. Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS, das Folgendes umfasst:

.- ein getragenes Head-up-Display (12) DO; und
.- ein Kopfhaltungserkennungssubsystem (16) DDP mit einem ersten beweglichen Verfolgungselement (18) D1, das fest am Display D0 angebracht ist, einem unbeweglichen zweiten Element (22) D2, das fest mit der Plattform (24) des Flugzeugs verbunden ist, und ein Mittel (26) zum Messen und Bestimmen der relativen Orientierung M12 des ersten beweglichen Verfolgungselements (18) D1 relativ zu einer Referenzmarke des unbeweglichen zweiten Elements (22) D2, das mit der Plattform (24) verbunden ist; und
.- ein Trägheitsgerät (30) D3 zum Liefern einer relativen Lage M3t der Plattform (24) relativ zu einer terrestrischen Referenz;
.- ein Gerät (32) Dp zum Liefern der Position des Flugzeugs relativ zur Erde; und
.- ein synthetisches Visualisierungssystem (34) zum Bereitstellen eines synthetischen Geländebildes auf dem Display D0, untergeordnet und abhängig von:

. * der Position und der relativen Lage M3t des Flugzeugs, jeweils von dem Gerät zum Positionieren des Flugzeugs und dem Lageträgheitsgeräts D3 gemessen; und
. * der relativen Orientierung M12 des ersten beweglichen Verfolgungselements D1 relativ zum unbeweglichen zweiten Element D2 des Haltungserkennungssubsystems DDP; und

.- ein Harmonisierungssubsystem zum Ausrichten des Display D0, des Haltungserkennungssubsystems DDP und des Lageträgheitsgeräts D3 aufeinander;

das Anzeigesystem für ein getragenes Head-up-Display für Informationen zum Steuern eines Flugzeugs in Übereinstimmung mit der realen Außenwelt, **dadurch gekennzeichnet, dass**:

.- das Harmonisierungssubsystem (36) einen dualen Harmonisierungscomputer (38) und eine Mensch-System-Schnittstelle IHS (40) umfasst, die eine Funktion zum Neueinstellen des übereinstimmenden Head-up-Display integriert; und

.- das duale Harmonisierungssubsystem (36) konfiguriert ist zum:

.- Starten (204) des Neueinstellungsverfahrens durch Aktivieren eines Neueinstellungsmodus zu einer Neueinstellungszustandsstartzeit t1c, durch Anzeigen aller oder einiger der in einen Neueinstellungszustand gesetzten übereinstimmenden Steuerinformationen, fixiert auf dem Display relativ zur Bewegung des beweglichen Verfolgungselements D1 und frei relativ zur Bewegung des Flugzeugs, und Speichern der Neueinstellungszustandsstartzeit t1c und der entsprechenden relativen Orientierung zwischen dem beweglichen ersten Verfolgungselement D1 und dem unbeweglichen zweiten Element D2 des Haltungserkennungssubsystems DDP miteinander; dann

.- Durchführen (206, 208, 210, 212, 214) einer Serie aus einer vorbestimmten Anzahl N von Messungen von relativen Orientierungen $\hat{K}_i$, wobei i von 1 bis N variiert, des ersten Verfolgungselements D1 relativ zu dem unbeweglichen zweiten Element D2, das mit der Plattform verbunden ist, des Haltungserkennungssubsystems DDP (16), entsprechend Ziellinien Vi, wobei i von 1 bis N variiert, wobei unterschiedliche Elemente der in den Neueinstellungszustand gesetzten Steuerinformationen mit entsprechenden Landmarken der realen Außenwelt überlagert sind; dann

.- gemeinsames Bestimmen (216), mit einem dualen Harmonisierungsalgorithmus, der relativen Orientierung M01 zwischen dem Display D0 und dem beweglichen Verfolgungselement D1 und der relativen Orientierung M3t des Trägheitsgeräts D3 relativ zur Erde auf der Basis der vom Subsystem DDP gemessenen Rotationsmatrizen $\hat{K}_i$ und der entsprechenden erwarteten theoretischen Rotationsmatrizen $\hat{U}_i$ von DDP, unter der Annahme, dass die relative Orientierung des unbeweglichen zweiten Elements D2 relativ zum Lageträgheitsgerät D3 permanent gleich der Identitätsmatrix von Reihe 3 ist.

**10.** Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS nach Anspruch 9, wobei

das Harmonisierungssubsystem zum Berechnen der relativen Orientierungsmatrix M01 zwischen dem Display D0 und dem Verfolgungselement des Subsystems DDP und der relativen Orientierungsmatrix M3t des Trägheitslagegeräts D3, mit dem Flugzeug verbunden, relativ zur Erde, jeweils als rechte Rotationskorrekturmatrix $\hat{D}$ und linke Rotationskorrekturmatrix $\hat{G}$ als gemeinsame Lösungen des dualen Harmonisierungsgleichungssystems konfiguriert ist: $\hat{U}_i = \hat{G} \cdot \hat{K}_i \cdot \hat{D}$, wobei i von 1 bis N variiert.

**11.** Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS nach Anspruch 10, wobei

die Mindestzahl von benötigten Messungen N von der Anzahl L von Winkelfreiheitsgraden der Rotationen M01 und M3t des Anzeigesystems abhängig ist, die fehlerhaft oder unbrauchbar sind, wobei die Anzahl L eine ganze Zahl gleich oder größer als 1 und gleich oder kleiner als 6 ist; und

die Auflösung des Gleichungssystems $\hat{U}_i = \hat{G} \cdot \hat{K}_i \cdot \hat{D}$, wobei i von 1 bis N variiert, einen Rückgewinnungsoperator $\pi(.)$ benutzt, der eine beliebige Matrix A in eine quadratische 3x3 Rotationsmatrix $\pi(A)$ umwandelt, die dem Sinn der kleinsten Quadrate über alle Termen der Matrix $\pi(A) - A$ über den Satz von 3x3 Rotationsmatrizen am nächsten liegt, um die Rechtsrotationsmatrix $\hat{D}$ und die Linksrotationsmatrix $\hat{G}$ zu bestimmen.

**12.** Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS nach Anspruch 11, wobei

die Anzahl N gleich oder größer ist als 3; und

.- der duale Harmonisierungscomputer zum Implementieren eines Schrittes (302) des Auflösens des dualen Harmonisierungsgleichungssystems durch Ausführen eines ersten Satzes (312) von Teilschritten konfiguriert ist, die Folgendes beinhalten:

.- Auswählen, in einem ersten Teilschritt (314), einer "Pivot"-Messung als die erste Messung aus den N Messungen und entsprechend i gleich 1, und für i = 2,..., N, Berechnen der Rotationsmatrizen $\hat{U}_{1,i}$ und $\hat{K}_{1,i}$ mit den Gleichungen: $\hat{U}_{1,i} = \hat{U}_1^T \cdot \hat{U}_i$ und $\hat{K}_{1,i} = \hat{K}_1^T \cdot \hat{K}_i$; dann

.- Bestimmen, in einem zweiten Teilschritt (316), für i = 2,..., N, der Haupteinheitsvektoren der Rotationen $\hat{U}_{1,i}$ und $\hat{K}_{1,i}$, jeweils mit $\vec{u}_i$ und $\vec{k}_i$ bezeichnet; dann

.- Berechnen, in einem dritten Teilschritt (318), der Rechtsmatrix $\hat{D}$, d.h. M01, mit der Gleichung:

$$\widehat{D} = \pi\left(\sum_{i\geq 2}\left(\vec{k}_i \cdot \vec{u}_i{}^T\right)\right);$$

dann

.- Bestimmen, in einem vierten Teilschritt (320), der Linksrotationsmatrix $\hat{G}$, d.h. M3t, auf der Basis der im dritten Teilschritt (318) berechneten Matrix $\hat{D}$ mit der Gleichung:

$$\widehat{G} = \pi\left(\sum_{i\geq 1}\left(\widehat{U}_i \cdot \widehat{D}^T \cdot \widehat{K}_i{}^T\right)\right).$$

**13.** Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS nach Anspruch 11, wobei

.- die Anzahl von Winkelfreiheitsgraden der Rechtsrotation $\hat{D}$, d..h. die Matrix M01, die fehlerhaft oder unbrauchbar sind, gleich drei ist, und der einzige fehlerhafte oder unbrauchbare Winkelfreiheitsgrad der Linksrotation $\hat{G}$, d.h. der Matrix M3t, der Steuerkurswinkel ist, unter der Annahme, dass die Nick- und Rollwinkel als mit ausreichender Präzision bekannt angenommen werden; und
.- die Gesamtzahl N von Messungen gleich oder größer als 4 ist; und
.- der gemeinsame duale Harmonisierungscomputer zum Implementieren eines Schrittes (402) des Aufösens des dualen Harmonisierungsgleichungssystems durch Ausführen eines ersten Satzes (412) von Teilschritten konfiguriert ist, die Folgendes beinhalten:
.- Berechnen, in einem vierten Teilschritt (414), für i = 2,..., N, der Matrizen $\hat{U}_{1,i}$ und der Vektoren $\vec{q}_i$ mit den Gleichungen:

$$\widehat{U}_{1,i} = \widehat{U}_1{}^T \cdot \widehat{U}_i \quad \text{und} \quad \vec{q}_i = \widehat{Q}_i{}^T \cdot \vec{k},$$

$$\vec{k} = \begin{pmatrix} 0 \\ 0 \\ 1 \end{pmatrix}$$

wobei der Vektor $\vec{k}$ durch die Gleichung definiert wird; dann
.- Initialisieren, in einem fünften Initialisierungsteilschritt (416), einer ersten Serie von Matrizen $\{\hat{D}_{[s]}\}$, wobei [s] die aktuelle ganze Reihe des Verlaufs der Serie $\{\hat{D}_{[s]}\}$ bezeichnet, durch Setzen von $\{\hat{D}_{[s]}\}$ auf gleich $I_3$, wobei $I_3$ die Identitätsmatrix bezeichnet; dann
.- Wiederholen eines sechsten iterativen Teilschrittes (418), der bewirkt, dass die Iteration [s] zu [s+1] passiert, durch Berechnen des Vektorwertes $\vec{d}_{[s+1]}$, dann des Wertes $\hat{D}_{[s+1]}$ der ersten Matrixserie $\{\hat{D}_{[s]}\}$ mit den folgenden Gleichungen:

$$\vec{d}_{[s+1]} = \frac{\sum_{i\geq 2}\left(\widehat{U}_{1,i} \cdot \widehat{D}_{[s]}^T \cdot \vec{q}_i\right)}{\left\|\sum_{i\geq 2}\left(\widehat{U}_{1,i} \cdot \widehat{D}^T \cdot \vec{q}_i\right)\right\|}$$

$$\widehat{D}_{[s+1]} = \pi\left(\sum_{i\geq 2}\left(\vec{q}_i \cdot \vec{d}_{[s+1]}^T \cdot \widehat{U}_{1,i}\right)\right),$$

wobei die Serie $\{\overline{d}_{[s]}\}$ eine zweite Zusatzserie von Vektoren bezeichnet und die Serie $\{\hat{D}_{[s]}\}$ in Richtung $\hat{D}$

konvergiert;

.- Stoppen, in einem siebten Teilschritt (420), des durch den sechsten Teilschritt (418) durchgeführten iterativen Prozesses, wenn die Grenze $\hat{D}$ mit ausreichender Präzision gemäß Definition durch einen vorbestimmten Schwellenwert approximiert wird.

14. Anzeigesystem für ein getragenes Head-up-Display für Informationen zum Steuern eines Flugzeugs in Übereinstimmung mit der realen Außenwelt und bereitgestellt über ein synthetisches Visualisierungssystem SVS nach einem der Ansprüche 9 bis 13, wobei

das duale Harmonisierungssubsystem, bei der Implementation der Neueinstellungsmessungen, zum Darstellen der für Sichtlinien benutzten Steuerinformationen, d.h. die Symbole und/oder die synthetische Darstellung des Geländes und/oder des Bildes eines elektromagnetischen Sensors gemäß einem für den Messmodus spezifischen Darstellungsmodus mit einer Farbe oder einem kennzeichnenden Linienstil konfiguriert ist.

**Claims**

1. A method for resetting a worn head-up display via a Synthetic Vision System SVS for viewing information for piloting an aircraft that is consistent with the real outside world, the resetting method being implemented by a worn head-up display system comprising:

.- a worn head-up display (12) DO;
.- a sub-system (36) for detecting head posture DDP having a first movable tracking element (18) D1 securely attached to the display D0, a second fixed element (22) D2 securely connected to the platform (24) of the aircraft, and a means (26) for measuring and determining the relative orientation M12 of the first movable tracking element (18) D1 relative to a reference system of the second fixed element (22) D2 connected to the platform;
.- an inertial device (30) D3 for providing the relative attitude M3t of the platform relative to the earth and a device (32) Dp for providing the position of the aircraft relative to the earth;
.- a Synthetic Vision System (34) for providing a synthetic ground image on the display D0, controlled by and a function of:

.* the position and the relative attitude M3t of the aircraft respectively measured by the device for positioning the aircraft and the inertial device; and
.* the relative orientation M12 of the first movable tracking element D1 relative to the second fixed element D2 of the sub-system for detecting posture; and

.- a sub-system for dual harmonisation for aligning the display D0, the sub-system for detecting posture DDP and the inertial device (30) D3 to each other;

the resetting method being **characterised in that** it comprises the following steps:

.- launching (204) the resetting method, by activating a resetting mode at a resetting state start time t1c, by displaying all or some of the consistent piloting information, placed in a resetting state, fixed on the display relative to the movement of the movable tracking element D1 and free relative to the movement of the aircraft, and storing together the resetting state start time t1c and the corresponding relative orientation between the first movable tracking element D1 and the second fixed element D2 of the sub-system for detecting posture DDP; then
.- performing (206, 208, 210, 212, 214) a series of a predetermined number N of measurements of relative orientations $\hat{K}_i$, with i varying from 1 to N, of the first tracking element D1 relative to the second fixed element D2, connected to the platform, of the sub-system for detecting posture DDP (16), corresponding to boresights Vi, with i varying from 1 to N, in which different elements of the piloting information placed in the resetting state are superposed with corresponding landmarks of the real outside world; then
.- jointly determining (216), using a dual harmonisation algorithm, the relative orientation M01 between the display D0 and the movable tracking element D1 and the relative orientation M3t of the inertial device D3 relative to the earth on the basis of the rotation matrices $\hat{K}_t$ measured by the sub-system DDP and the corresponding expected theoretical matrices $\hat{U}_t$ of rotation of DDP, assuming that the relative orientation of the second fixed element D2 relative to the inertial attitude device D3 is permanently equal to the identity matrix of row 3.

2. The method for resetting a worn head-up display via a Synthetic Vision System SVS for viewing information for piloting an aircraft that is consistent with the real outside world as claimed in claim 1, wherein the consistent piloting information is included in the set of information formed by consistent symbology, in particular a synthetic runway, by a synthetic ground representation SVS and by an image originating from an electromagnetic sensor, in particular an infrared camera.

3. The method for resetting a worn head-up display via a Synthetic Vision System SVS for viewing information for piloting an aircraft that is consistent with the real outside world as claimed in any one of claims 1 to 2, further comprising:

a step (218), in which the Synthetic Vision System SVS is provided with the harmonised right-hand M01 and left-hand M3t correction matrices, the resetting mode is deactivated by the harmonisation sub-system, and the Synthetic Vision System SVS resets its display by applying the reset correction matrices M01 and M3t.

4. The method for resetting a worn head-up display via a Synthetic Vision System SVS for viewing information for piloting an aircraft that is consistent with the real outside world as claimed in any one of claims 1 to 3, wherein the dual harmonisation algorithm computes the relative orientation matrix M01 between the display D0 and the tracking element of the sub-system DDP and the relative orientation matrix M3t of the inertial attitude device D3, connected to the aircraft, relative to the earth, respectively as the right-hand rotation correction matrix $\hat{D}$ and the left-hand rotation correction matrix $\hat{G}$ as joint solutions of the dual harmonisation equations system: $\hat{U}_i = \hat{G} \cdot \hat{K}_i \cdot \hat{D}$, with i varying from 1 to N.

5. The method for resetting a worn head-up display via a Synthetic Vision System SVS for viewing information for piloting an aircraft that is consistent with the real outside world as claimed in claim 4, wherein the minimum number of required measurements N depends on the number L of degrees of angular freedom of the rotations M01 and M3t of the display system that are erroneous or unusable, said number L being an integer greater than or equal to 1 or less than or equal to 6; and

the resolution of the equations system $\hat{U}_i = \hat{G} \cdot \hat{K}_i \cdot \hat{D}$, with i varying from 1 to N, uses a restoration operator $\pi(.)$, which converts any matrix A into a square 3x3 rotation matrix $\pi(A)$ that is closest to the least squares sense over all the terms of the matrix $\pi(A) - A$ over all the 3x3 rotation matrices, in order to determine the right-hand rotation matrix $\hat{D}$ and the left-hand rotation matrix $\hat{G}$.

6. The method for resetting a worn head-up display via a Synthetic Vision System SVS for viewing information for piloting an aircraft that is consistent with the real outside world as claimed in claim 5, wherein:

the number N is greater than or equal to 3;
the step (302) of resolving the dual harmonisation equations system comprises a first set (312) of sub-steps involving:

.- selecting, in a first sub-step (314), a "pivot" measurement as being the first measurement from among the N measurements and corresponding to i equal to 1, and for i = 2,..., N, computing the rotation matrices $\hat{U}_{1,i}$ and $\hat{K}_{1,i}$ using the equations: $\hat{U}_{1,i} = \hat{U}_1^T \cdot \hat{U}_i$ and $\hat{K}_{1,i} = \hat{K}_1^T \cdot \hat{K}_i$ ; then
.- determining, in a second sub-step (316), for i = 2,..., N, the main unit vectors of the rotations $\hat{U}_{1,i}$ and $\hat{K}_{1,i}$, respectively denoted by $\vec{u}_i$ and $\vec{k}_i$; then
.- computing, in a third sub-step (318), the right-hand matrix $\hat{D}$, i.e. M01, using the equation:

$$\hat{D} = \pi\left(\sum_{i \geq 2}\left(\vec{k}_i \cdot \vec{u}_i^T\right)\right);$$

then
.- determining, in a fourth sub-step (320), the left-hand rotation matrix $\hat{G}$, i.e. M3t, on the basis of the matrix $\hat{D}$ computed in the third sub-step (318), using the equation:

$$\hat{G} = \pi\left(\sum_{i \geq 1}\left(\hat{U}_i \cdot \hat{D}^T \cdot \hat{K}_i^T\right)\right).$$

7. The method for resetting a worn head-up display via a Synthetic Vision System SVS for viewing information for piloting an aircraft that is consistent with the real outside world as claimed in any one of claims 4 to 5, wherein:

the number of degrees of angular freedom of the right-hand rotation $\hat{D}$, i.e. the matrix M01, that are erroneous or unusable is equal to three and the only degree of erroneous or unusable angular freedom of the left-hand rotation $\hat{G}$, i.e. the matrix M3t, is the heading angle, assuming that the pitch and roll angles are assumed known with sufficient precision; and
the total number N of measurements is greater than or equal to 4; and
the step (402) of resolving the dual harmonisation equations system comprises a first set (412) of sub-steps involving:

.- computing, in a fourth sub-step (414), for i = 2,..., N, the matrices $\hat{U}_{1,i}$ and the vectors $\vec{q}_i$ using the equations:

$$\hat{U}_{1,i} = \hat{U}_1^{\mathrm{T}} \cdot \hat{U}_i \text{ and } \vec{q}_i = \hat{Q}_i^{\mathrm{T}} \cdot \vec{k},$$
$$\vec{k} = \begin{pmatrix} 0 \\ 0 \\ 1 \end{pmatrix};$$

the vector $\vec{k}$ being defined by the equation     ; then

.- initialising, in a fifth initialisation sub-step (416), a first series of matrices $\{\hat{D}_{[s]}\}$, with [s] denoting the current integer row for the path of the series $\{\hat{D}_{[s]}\}$, by setting $\{\hat{D}_{[s]}\}$ equal to $I_3$, with $I_3$ denoting the identity matrix; then
.- repeating a sixth iterative sub-step (418) causing the iteration [s] to transition to [s+1] by computing the vector value $\vec{d}_{[s+1]}$, then the value $\hat{D}_{[s+1]}$ of the first matrix series $\{\hat{D}_{[s]}\}$ using the following equations:

$$\vec{d}_{[s+1]} = \frac{\sum_{i\geq 2}(\hat{U}_{1,i} \cdot \hat{D}_{[s]}^{\mathrm{T}} \cdot \vec{q}_i)}{\left\|\sum_{i\geq 2}(\hat{U}_{1,i} \cdot \hat{D}^{\mathrm{T}} \cdot \vec{q}_i)\right\|}$$

$$\hat{D}_{[s+1]} = \pi\left(\sum_{i\geq 2}(\vec{q}_i \cdot \vec{d}_{[s+1]}^{\mathrm{T}} \cdot \hat{U}_{1,i})\right),$$

the series $\{\vec{d}_{[s]}\}$ denoting a second auxiliary series of vectors and the series $\{\hat{D}_{[s]}\}$ converging towards $\hat{D}$;

.- stopping, in a seventh sub-step (420), the iterative process carried out through the sixth sub-step (418) when the limit $\hat{D}$ is approximated with sufficient precision defined by a predetermined threshold value.

8. The method for resetting a worn head-up display via a Synthetic Vision System SVS for viewing information for piloting an aircraft that is consistent with the real outside world as claimed in any one of claims 1 to 7, wherein:
the total number N of measurements is adjusted as a function of the number L of degrees of freedom to be corrected in the display system and of the desired precision of the estimate of the right-hand $\hat{D}$ and left-hand $\hat{G}$ rotation matrices.

9. A display system for a worn head-up display for viewing information for piloting an aircraft consistent with the real outside world and provided via a Synthetic Vision System SVS, comprising:

.- a worn head-up display (12) DO; and
.- a sub-system (16) for detecting head posture DDP having a first movable tracking element (18) D1 securely attached to the display D0, a second fixed element (22) D2 securely connected to the platform (24) of the aircraft, and a means (26) for measuring and determining the relative orientation M12 of the first movable tracking element (18) D1 relative to a reference system of the second fixed element (22) D2 connected to the platform (24); and
.- an inertial device (30) D3 for providing a relative attitude M3t of the platform (24) relative to a terrestrial reference;
.- a device (32) Dp for providing the position of the aircraft relative to the earth; and
.- a Synthetic Vision System (34) for providing a synthetic ground image on the display D0, controlled by and a function of:

.* the position and the relative attitude M3t of the aircraft respectively measured by the device for positioning the aircraft and the inertial attitude device D3; and

.* the relative orientation M12 of the first movable tracking element D1 relative to the second fixed element D2 of the sub-system for detecting posture DDP; and

.- a harmonisation sub-system for aligning the display D0, the sub-system for detecting posture DDP and the inertial attitude device D3 to each other;

the display system for a worn head-up display for viewing information for piloting an aircraft consistent with the real outside world being **characterised in that**:

.- the harmonisation sub-system (36) comprises a dual harmonisation computer (38) and a human-system interface IHS (40) integrating a function for resetting the consistent head-up display; and

.- the dual harmonisation sub-system (36) is configured to:

.- launch (204) the resetting method, by activating a resetting mode at a resetting state start time t1c, by displaying all or some of the consistent piloting information, placed in a resetting state, fixed on the display relative to the movement of the movable tracking element D1 and free relative to the movement of the aircraft, and storing together the resetting state start time t1c and the corresponding relative orientation between the first movable tracking element D1 and the second fixed element D2 of the sub-system for detecting posture DDP; then

.- perform (206, 208, 210, 212, 214) a series of a predetermined number N of measurements of relative orientations $\hat{K}_i$, with i varying from 1 to N, of the first tracking element D1 relative to the second fixed element D2, connected to the platform, of the sub-system for detecting posture DDP (16), corresponding to boresights Vi, with i varying from 1 to N, in which different elements of the piloting information placed in the resetting state are superposed with corresponding landmarks of the real outside world; then

.- jointly determine (216), using a dual harmonisation algorithm, the relative orientation M01 between the display D0 and the movable tracking element D1 and the relative orientation M3t of the inertial device D3 relative to the earth on the basis of the rotation matrices $\hat{K}_i$ measured by the sub-system DDP and the corresponding expected theoretical matrices $\hat{U}_i$ of rotation of DDP, assuming that the relative orientation of the second fixed element D2 relative to the inertial attitude device D3 is permanently equal to the identity matrix of row 3.

10. The display system for a worn head-up display for viewing information for piloting an aircraft consistent with the real outside world and provided via a Synthetic Vision System SVS as claimed in claim 9, wherein the harmonisation sub-system is configured to compute the relative orientation matrix M01 between the display D0 and the tracking element of the sub-system DDP and the relative orientation matrix M3t of the inertial attitude device D3, connected to the aircraft, relative to the earth, respectively as the right-hand rotation correction matrix $\hat{D}$ and the left-hand rotation correction matrix $\hat{G}$ as joint solutions of the dual harmonisation equations system: $\hat{U}_i = \hat{G} \cdot \hat{K}_i \cdot \hat{D}$, with i varying from 1 to N.

11. The display system for a worn head-up display for viewing information for piloting an aircraft consistent with the real outside world and provided via a Synthetic Vision System SVS as claimed in claim 10, wherein the minimum number of required measurements N depends on the number L of degrees of angular freedom of the rotations M01 and M3t of the display system that are erroneous or unusable, said number L being an integer greater than or equal to 1 and less than or equal to 6; and

the resolution of the equations system $\hat{U}_i = \hat{G} \cdot \hat{K}_i \cdot \hat{D}$, with i varying from 1 to N, uses a restoration operator $\pi(.)$, which converts any matrix A into a square 3x3 rotation matrix $\pi(A)$ that is closest to the least squares sense over all the terms of the matrix $\pi(A)$ - A over all the 3x3 rotation matrices, in order to determine the right-hand rotation matrix $\hat{D}$ and the left-hand rotation matrix $\hat{G}$.

12. The display system for a worn head-up display for viewing information for piloting an aircraft consistent with the real outside world and provided via a Synthetic Vision System SVS as claimed in claim 11, wherein:

the number N is greater than or equal to 3; and

.- the dual harmonisation computer is configured to implement a step (302) of resolving the dual harmonisation equations system by executing a first set (312) of sub-steps involving:

.- selecting, in a first sub-step (314), a "pivot" measurement as being the first measurement from among the N measurements and corresponding to i equal to 1, and for i = 2,..., N, computing the rotation matrices $\hat{U}_{1,i}$ and

$\hat{K}_{1,i}$ using the equations: $\hat{U}_{1,i} = \hat{U}_1^T \cdot \hat{U}_i$ and $\hat{K}_{1,i} = \hat{K}_1^T \cdot \hat{K}_i$ ; then

.- determining, in a second sub-step (316), for $i = 2,..., N$, the main unit vectors of the rotations $\hat{U}_{1,i}$ and $\hat{K}_{1,i}$, respectively denoted by $\vec{u}_i$ and $\vec{k}_i$; then

.- computing, in a third sub-step (318), the right-hand matrix $\hat{D}$, i.e. M01, using the equation:

$$\hat{D} = \pi \left( \sum_{i \geq 2} \left( \vec{k}_i \cdot \vec{u}_i^T \right) \right) ;$$

then

.- determining, in a fourth sub-step (320), the left-hand rotation matrix $\hat{G}$, i.e. M3t, on the basis of the matrix $\hat{D}$ computed in the third sub-step (318), using the equation:

$$\hat{G} = \pi \left( \sum_{i \geq 1} \left( \hat{U}_i \cdot \hat{D}^T \cdot \hat{K}_i^T \right) \right) .$$

13. The display system for a worn head-up display for viewing information for piloting an aircraft consistent with the real outside world and provided via a Synthetic Vision System SVS as claimed in claim 11, wherein:

.- the number of degrees of angular freedom of the right-hand rotation $\hat{D}$, i.e. the matrix M01, that are erroneous or unusable, is equal to three and the only degree of erroneous or unusable angular freedom of the left-hand rotation $\hat{G}$, i.e. the matrix M3t, is the heading angle, assuming that the pitch and roll angles are assumed known with sufficient precision; and

.- the total number N of measurements is greater than or equal to 4; and

.- the joint dual harmonisation computer is configured to implement a step (402) of resolving the dual harmonisation equations system by executing a first set (412) of sub-steps involving:

.- computing, in a fourth sub-step (414), for $i = 2,..., N$, the matrices $\hat{U}_{1,i}$ and the vectors $\vec{q}_i$ using the equations:

$$\hat{U}_{1,i} = \hat{U}_1^T \cdot \hat{U}_i \text{ and } \vec{q}_i = \hat{Q}_i^T \cdot \vec{k},$$

$$\vec{k} = \begin{pmatrix} 0 \\ 0 \\ 1 \end{pmatrix} ;$$

the vector $\vec{k}$ being defined by the equation ; then

.- initialising, in a fifth initialisation sub-step (416), a first series of matrices $\{\hat{D}_{[s]}\}$, with [s] denoting the current integer row for the path of the series $\{\hat{D}_{[s]}\}$, by setting $\{\hat{D}_{[s]}\}$ equal to $I_3$, with $I_3$ denoting the identity matrix; then

.- repeating a sixth iterative sub-step (418) causing the iteration [s] to transition to [s+1] by computing the vector value $\vec{d}_{[s+1]}$, then the value $\hat{D}_{[s+1]}$ of the first matrix series $\{\hat{D}_{[s]}\}$ using the following equations:

$$\vec{d}_{[s+1]} = \frac{\sum_{i \geq 2} \left( \hat{U}_{1,i} \cdot \hat{D}_{[s]}^T \cdot \vec{q}_i \right)}{\left\| \sum_{i \geq 2} \left( \hat{U}_{1,i} \cdot \hat{D}^T \cdot \vec{q}_i \right) \right\|}$$

$$\hat{D}_{[s+1]} = \pi \left( \sum_{i \geq 2} \left( \vec{q}_i \cdot \vec{d}_{[s+1]}^T \cdot \hat{U}_{1,i} \right) \right) ,$$

the series $\{\vec{d}_{[s]}\}$ denoting a second auxiliary series of vectors and the series $\{\hat{D}_{[s]}\}$ converging towards $\hat{D}$;

.- stopping, in a seventh sub-step (420), the iterative process carried out through the sixth sub-step (418) when the limit $\hat{D}$ is approximated with sufficient precision defined by a predetermined threshold value.

14. The display system for a worn head-up display for viewing information for piloting an aircraft consistent with the real outside world and provided via a Synthetic Vision System SVS as claimed in any one of claims 9 to 13, wherein the dual harmonisation sub-system is configured, during the implementation of the resetting measurements, to represent the piloting information used for boresights, i.e. the symbology and/or the synthetic representation of the ground and/or the image of an electromagnetic sensor according to a representation mode specific to the measurement mode using a colour or a distinctive line style.

FIG.1

EP 3 502 844 B1

202

204    i = 1
       N

203

206

208

i + 1 → i

210

214

212    i = N    oui

non

216

218

FIG.2

Vi, i = 1 à N

Itération
1 à N

| Avant recalage |
| 206 |
| 210 |
| 218 |

| 204 |
| 208 |
| 216 |

# FIG.3

302

314

312

316

318

FIG.4

402

414

412

416

418

FIG.5

## RÉFÉRENCES CITÉES DANS LA DESCRIPTION

**Documents brevets cités dans la description**

- WO 2015165838 A1

- WO 2009081177 A2

**Littérature non-brevet citée dans la description**

- **TUCERYAN et al.** Single point active alignment method (SPAAM) for optical see-through HMD calibration for AR. *IEEE and ACM International Symposium on Augmented Reality (ISAR2000),* 05 Octobre 2000

- **JANIN et al.** Calibration of head-mounted displays for augmented reality applications. *IEEE Virtual Reality Annual International Symposium (VRAIS 93,* 18 Septembre 1993